Europäisches Patentamt

European Patent Office

Office européen des brevets

(11) Numéro de publication: **0 425 579 B1**

## (12) FASCICULE DE BREVET EUROPEEN

(45) Date de publication de fascicule du brevet: **20.04.94**   (51) Int. Cl.5: **C01B** 31/30, C01B 33/06

(21) Numéro de dépôt: **89909203.5**

(22) Date de dépôt: **21.07.89**

(86) Numéro de dépôt internationale :
**PCT/FR89/00384**

(87) Numéro de publication internationale :
**WO 90/01016 (08.02.90 90/04)**

Le dossier contient des informations techniques
présentées postérieurement au dépôt de la
demande et ne figurant pas dans le présent
fascicule.

(54) **PROCEDE DE PREPARATION DE CARBURES ET DE SILICIURES PAR VOIE MECANOCHIMIOUE.**

(30) Priorité: **22.07.88 FR 8809896**

(43) Date de publication de la demande:
**08.05.91 Bulletin 91/19**

(45) Mention de la délivrance du brevet:
**20.04.94 Bulletin 94/16**

(84) Etats contractants désignés:
**DE FR GB IT**

(56) Documents cités:
**US-A- 4 257 809**

**Chemical Abstracts, volume 8, No. 16, 18
April 1988, (Columbus, Ohio, US), see page
147, abstract 134377K, & CS, A, 238306 (M.
CZAJLIK) 1 October 1987**

(73) Titulaire: **CENTRE NATIONAL DE LA RECHER-
CHE SCIENTIFIOUE (CNRS)
15, Ouai Anatole France
F-75700 Paris Cedex 07(FR)**

(72) Inventeur: **LE CAER, Gérard
44, rue de la Commanderie
F-54000 Nancy(FR)**
Inventeur: **MATTEAZZI, Paolo
28, via S. Margherita
I-31100 Trévise(IT)**
Inventeur: **BAUER-GROSSE, Elizabeth
28, allée A
Bois-le-Duc
F-54500 Vandoeuvre-les-Mines(FR)**

EP 0 425 579 B1

Chemical Abstracts, volume 108, No. 6, 18 April 1988, (Columbus, Ohio, US), see page 147, abstract 134378m, & CS, A, 238307 (M. CZAJLIK) 1 October 1987

Scientific American, volumn 234, No. 5, May 1976, Scientific American Inc., (New York, US), J.S. Benjamin: "Mechanical alloying", page 40-48 cited in the application

(74) Mandataire: Sueur, Yvette et al
Cabinet SUEUR & L'HELGOUALCH,
78, Rue Carnot
F-95240 Cormeilles-en-Parisis (FR)

## Description

La présente invention a pour objet un procédé de préparation de poudres de carbures et de siliciures de métaux de transition et/ou d'éléments de la colonne III A et/ou d'éléments de la colonne IV A du tableau périodique, ainsi que les composés obtenus.

Il existe divers procédés de préparation de carbures de métaux de transition ou d'éléments des colonnes IIIA ou IVA.

En général, les carbures sont obtenus par synthèse chimique directe (Cf. par exemple "L.E. Toth, Transition Metal Carbides and Nitrides, Academic Press, New-York-London 1971, Refractory Materials, A series of monographs, Vol. 7"). Les rendements des réactions sont bons, mais en général, les températures sont trop basses pour obtenir des échantillons homogènes. La plupart des carbures doivent être chauffés à plus de 2000°C pendant plusieurs heures pour supprimer l'hétérogénéité. En outre, un tel procédé de synthèse directe ne peut être mis en oeuvre pour tous les carbures. Il en est ainsi, par example, pour le carbure $Fe_7C_3$. Il est alors possible par exemple de mettre en oeuvre des synthèses à haute température et sous haute pression ou de cristalliser des alliages amorphes (par exemple pour $Fe_{1-x}C_x$, $x \geq 0,33$).

Mais de tels procédés présentent certains inconvénients. Les inconvénients majeurs proviennent de la pollution par l'oxygène, de l'existence de gradients de concentration dus à la diffusion lente du carbone, de la pollution par l'hydrogène lorsque le traitement met en oeuvre de l'hydrogène ou un hydrocarbure et une purification finale est nécessaire. En outre, ils impliquent l'utilisation à des températures élevées, d'atmosphères contrôlées. (Cf. "E.K. Storms, chap. XIII, The Refractory Carbides, Academic Press New-York, London 1967").

Le but de la présente invention est de supprimer ces inconvénients et de proposer un nouveau procédé d'obtention de carbures et de siliciures qui ne nécessite pas l'utilisation de températures élevées et qui permet d'obtenir certains composés qui ne peuvent être préparés par les procédés connus. Dans la suite du texte, les carbures et les siliciures pourront être dénommés composé M,X, M représentant un ou plusieurs éléments choisis parmi les métaux de transition et/ou les éléments de la colonne III A et/ou les éléments de la colonne IV A, et X représentant C ou Si, M étant différent de C, W et Re lorsque X représente C et M représente un seul élément, M étant différent de V, Nb, W et Ta lorsque X représente Si et M représente un seul élément.

On connaît des procédés de fabrication d'alliages métalliques par broyage mécanique à partir de poudre de chacun des éléments constituant l'alliage. Un tel procédé est décrit par exemple dans "Scientific American 234 n° 5, 1976". On a également utilisé cette technique de broyage mécanique pour insérer des carbures dans une matrice métallique. Par exemple, le brevet européen 67584 décrit l'insertion de whiskers de SiC dans une matrice métallique par broyage mécanique d'une poudre de SiC déjà formé et d'une poudre de métal. En outre, le brevet européen 88578 décrit la préparation d'alliages contenant au maximum 2% de carbone, une telle proportion ne permettant pas l'obtention d'un carbure. Mais la préparation de carbure par broyage mécanique d'une poudre de carbone et d'une poudre de l'élément à carburer n'a jamais été décrite. En effet, le système carbone/métal de transition est réputé être un système défavorable pour une réaction par broyage mécanique, compte-tenu de la diffusion lente du carbone. On peut se référer à ce propos à "Lars Ramqvist Jenkont. Ann 153 (1969) 1-21, Preparation Properties and Electronic Structure of Refractory Carbides and Related Compounds" citant "Fundamentals of Refratory Compounds, Editors H.H. Hausner, M.G. Bowman, Plenum Press, New-York 1968".

Le demandeur a maintenant réussi à mettre au point un procédé de préparation de poudre d'un composé M,X tel que défini précédemment. Ce procédé permet d'obtenir de nombreux carbures et siliciures connus. Il permet également d'obtenir des carbures nouveaux qui n'étaient pas accessibles par les procédés connus.

Le procédé de préparation de poudre d'un composé de M,X dans lequel M représente un ou plusieurs éléments choisis parmi les métaux de transition et/ou les éléments de la colonne III A et/ou les éléments de la colonne IV A du tableau périodique, et X représente C ou Si, M étant différent de C, W et Re lorsque X représente C et M représente un seul élément, M étant différent de V, Nb, W et Ta lorsque X représente Si et M représente un seul élément, est caractérisé en ce qu'il est effectué par voie mécanochimique et qu'il consiste à:

1) mélanger une poudre de X avec une poudre de M, la proportion de M et de X étant choisie de manière à combiner la totalité de M avec X;

2) faire subir au mélange de poudres un broyage mécanique pendant une durée suffisante pour obtenir le composé M,X, le broyage étant effectué à l'aide d'un broyeur à haute énergie.

De préférence, la proportion de X est supérieure à 2% en poids par rapport au poids total du mélange de poudres.

Les éléments de la colonne III A préférés pour M sont Al et B.

Parmi les éléments de la colonne IV A, on choisira de préférence Si pour M.

Parmi les métaux de transition choisis pour M, on préférera Ti, V, Cr, Mn, Fe, Co, Ni, Zr, Nb, Mo, Hf, Ta, lorsque X représente C et Ti, Cr, Mn, Fe, Co, Ni, Zr, Mo, Hf et Re lorsque X représente Si.

Pour préparer des composés M,X complexes, on peut utiliser comme poudre de M, un mélange de poudres de différents éléments M à l'état libre et/ou une poudre d'un alliage ou d'un composé de deux ou plusieurs éléments M, chaque élément étant choisi parmi les métaux de transition et/ou les éléments de la colonne III A et/ou les éléments de la colonne IV A.

La dimension des grains des poudres de départ n'est pas critique. On peut utiliser les poudres commerciales, avec des dimensions de grains allant de quelques $\mu$m à quelques dizaines de $\mu$m. Si les dimensions des grains de la poudre utilisée sont supérieures à cette fourchette, une réduction des dimensions se fera lors du début de l'étape de broyage. De même, si un élément M n'est pas disponible sous forme de poudre, on peut utiliser des blocs massifs qui seront soumis à un broyage avant le mélange avec la poudre de X, dans le broyeur qui servira à broyer le mélange.

Le broyage est effectué à l'aide d'un broyeur à haute énergie. Parmi ces broyeurs, on peut citer par exemple les broyeurs à impact tels que les broyeurs à billes, les broyeurs annulaires à billes, les broyeurs à billes vibratoires, les broyeurs planétaires, les broyeurs à rouleaux; les broyeurs autogènes, les broyeurs par attrition et les désintégrateurs à jet d'air ou à jet liquide. Pour une description plus complète de ces broyeurs, on pourra se référer à "Kirk-Othmer, Encyclopedia of Chemical Technology, 3ième édit. vol. 21, p. 132 à 161".

Comme exemple d'un tel broyeur, on peut citer le broyeur à billes SPEX 8000 commercialisé par SPEX Industries Inc., USA, ou le broyeur planétaire à billes Pulvérisette 5 ou 7 (marques déposées) commercialisé par FRITSCH.

Le broyeur SPEX 8000 comporte un récipient cylindrique en carbure de tungstène WC hexagonal (désigné dans la suite par WCh) incluant aussi les éléments habituels des matériaux frittés en carbure de tungstène, c'est-à-dire W, Co, C, et, comme éléments mineurs, Ta, Ti, Nb, ces derniers éléments formant un carbure complexe appelé "TiC" dans la suite. Le cylindre a un diamètre de 5,7 cm et une hauteur de 6,3 cm. Les billes utilisées sont des billes de tungstène dont le diamètre est de 1,1 cm et la masse de 9,5 g. Le rapport de la masse de poudre à broyer à la masse des billes sera de préférence compris entre 1/50 et 1/4.

L'atmosphère dans laquelle le broyage est effectué n'est pas critique. Les poudres peuvent être introduites dans le cylindre soit à l'air libre, soit sous atmosphère de gaz inerte tel que l'azote ou l'argon par example, ou sous vide. Ensuite, le cylindre fermé est placé dans le broyeur. Le broyage est obtenu par une agitation vigoureuse du récipient dans trois directions perpendiculaires.

La durée de broyage nécessaire pour obtenir une réaction totale se détermine aisément pour chaque composé M,X à obtenir. L'analyse des clichés de diffraction des rayons X ou des spectres Mössbauer effectuée sur des échantillons prélevés à différents moments lors du broyage permet de définir le moment où la réaction est terminée. L'utilisation d'un broyeur à énergie spécifique supérieure permet de réduire la durée du broyage.

Le broyage peut être effectué, soit de manière continue, soit de manière discontinue en ménageant des pauses au cours du broyage.

Parmi les composés M,X obtenus, certains sont abrasifs, essentiellement les carbures, à un degré plus ou moins important. Lors du broyage, les grains formés provoquent une érosion des billes contribuant au broyage et, dans une moindre mesure, du récipient qui les contient. Des traces du matériau constituant le récipient et les billes se trouvent par conséquent dans le composé obtenu. Si ce matériau est du carbure de tungstène, le cliché de diffraction des rayons X du composé préparé contiendra, outre ses raies propres, les raies correspondant à WCh + "TiC". Dans la suite du texte, WCh + "TiC" désigne le matériau constituant le récipient de broyage et les billes de broyage. Les raies propres au cobalt, autre constituant du matériau constituant le récipient et les billes, ne sont pas visibles car elles se superposent à certaines raies de WCh + "TiC".

Le taux de perte de masse des billes au cours du broyage, toutes choses étant égales par ailleurs, permet de comparer la dureté des différents composés obtenus.

La présente invention est illustrée à l'aide des exemples suivants qui ne sont pas limitatifs.

Dans les exemples 1 à 26, les essais ont été effectués à l'aide du broyeur SPEX 8000, dont le récipient contenant les poudres et les billes servant au broyage sont en carbure de tungstène WCh + "TiC". Le broyeur contenait deux billes. La masse de chacune des billes était inférieure ou égale à 9,5 g, selon que les billes étaient neuves ou non.

Le carbone utilisé était du graphite présentant une dimension de particules de 45 $\mu$m, commercialisé par STREM Chemicals Inc., USA.

Le silicium utilisé était soit du silicium haute pureté à 99,99%, soit du silicium métallurgique à 97,5%.

La fréquence d'agitation du récipient contenant les poudres était de 20 Hz. Le dispositif était mis en agitation suivant un cycle: 90 mn d'agitation, 30 mn de repos. La durée totale de broyage donnée dans les exemples n'inclut pas les temps de repos.

Dans tous ces exemples, un volume maximal de 0,445 cm$^3$ de poudres a été utilisé, représentant au maximum 4 g de poudres.

Dans l'exemple 27, le broyage a été effectué à l'aide d'un microbroyeur planétaire à billes, le broyeur Pulvérisette 7 (marque déposée) commercialisé par la société Fritsch. Ce broyeur comportait deux jarres ayant un volume de 45 ml et constituées par WCh + "TiC" contenant chacune sept billes de broyage en carbure de tungstène ayant 15 mm de diamètre.

Les produits obtenus ont été identifiés par leur cliché de diffraction des rayons X et/ou leur spectre Mössbauer.

La figure 1 représente une vue au microscope optique d'une poudre de carbure de silicium obtenue dans l'exemple 1.

Les figures 2 à 20 et 30 à 39 représentent les clichés de diffraction des rayons X sur lesquels est porté en abscisse l'angle de diffraction 2$\theta$ en degrés ( relation de Bragg, $\lambda = 2d\sin\theta$) et en ordonnée le nombre d'impulsions comptées

Les figures 21 à 29 et 40 représentent les spectres Mössbauer (57Fe) sur lesquels en abscisse est portée la vitesse de la source en mm/s et en ordonnée l'absorption relative.

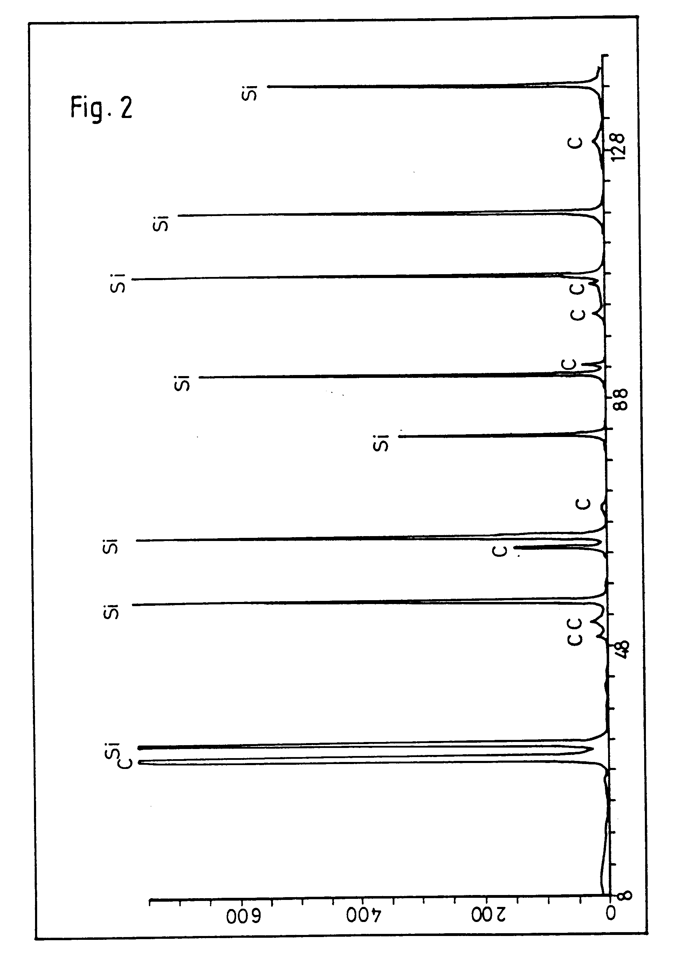

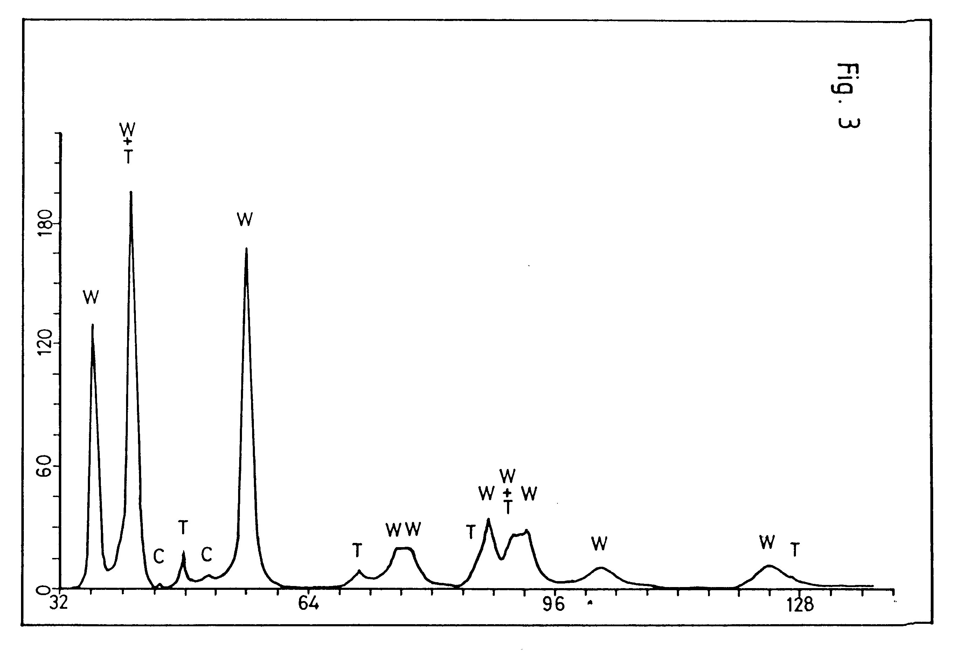

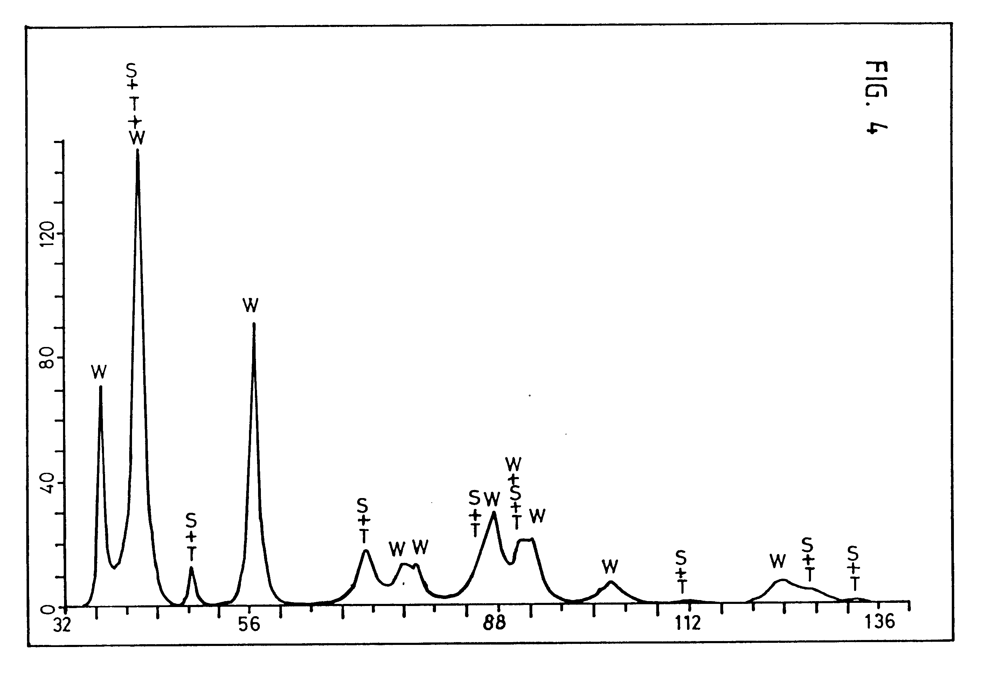

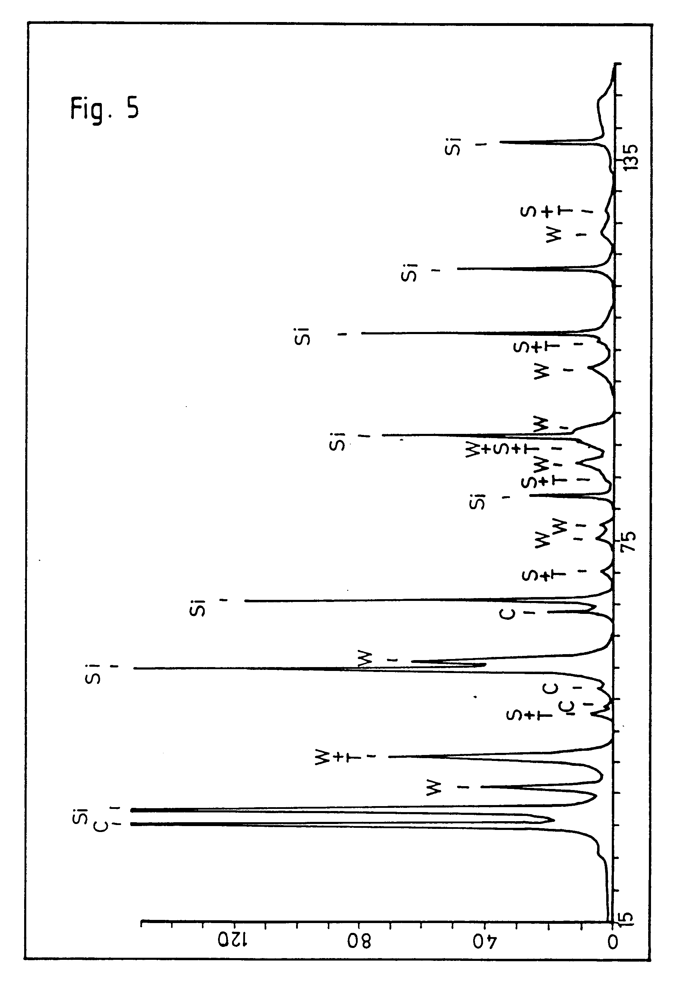

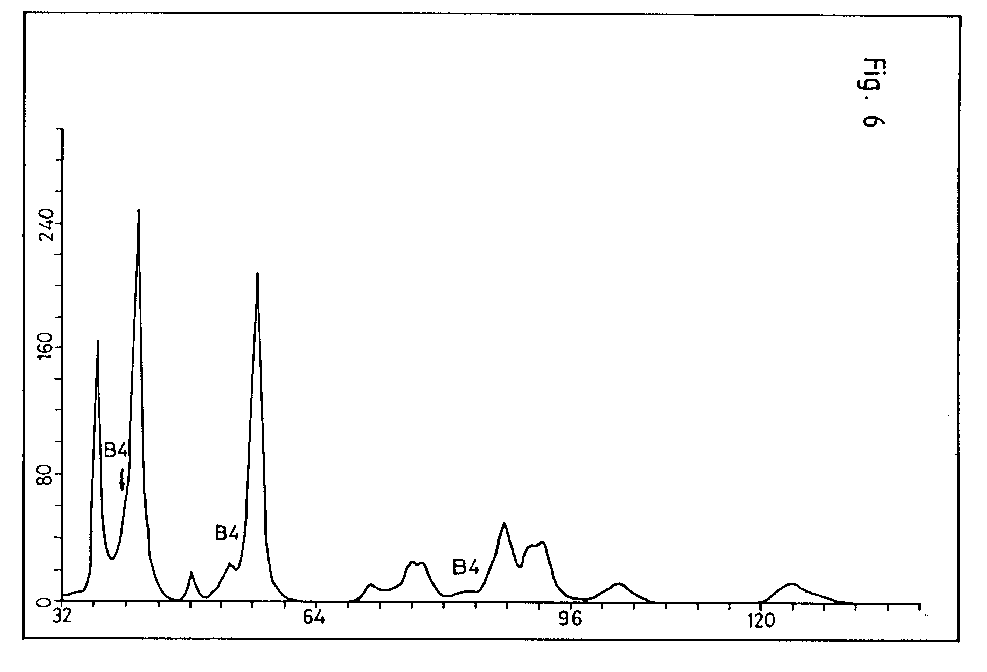

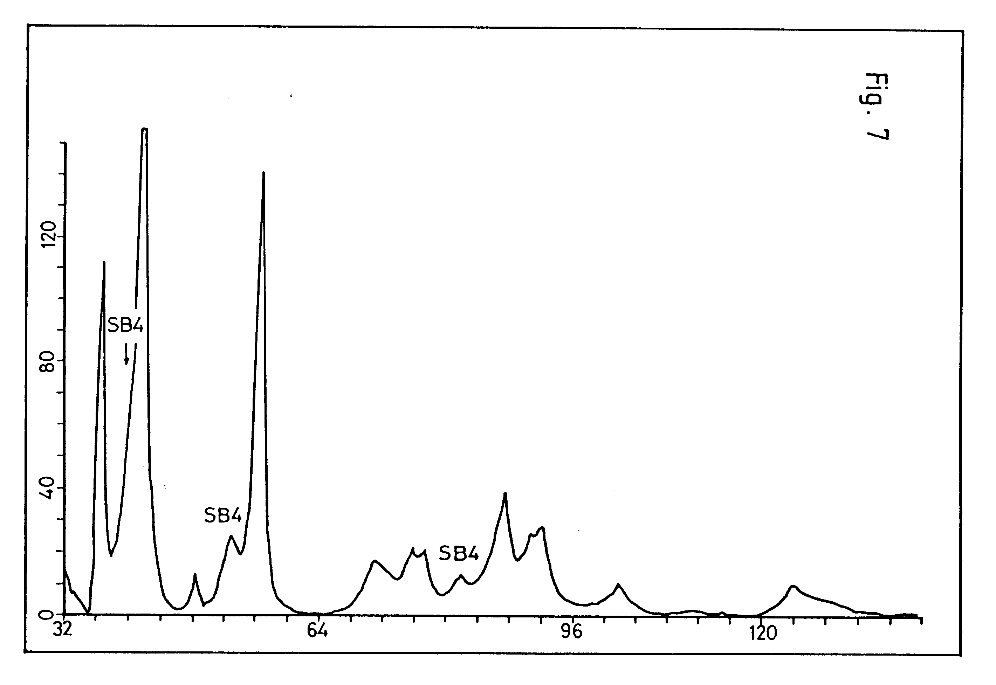

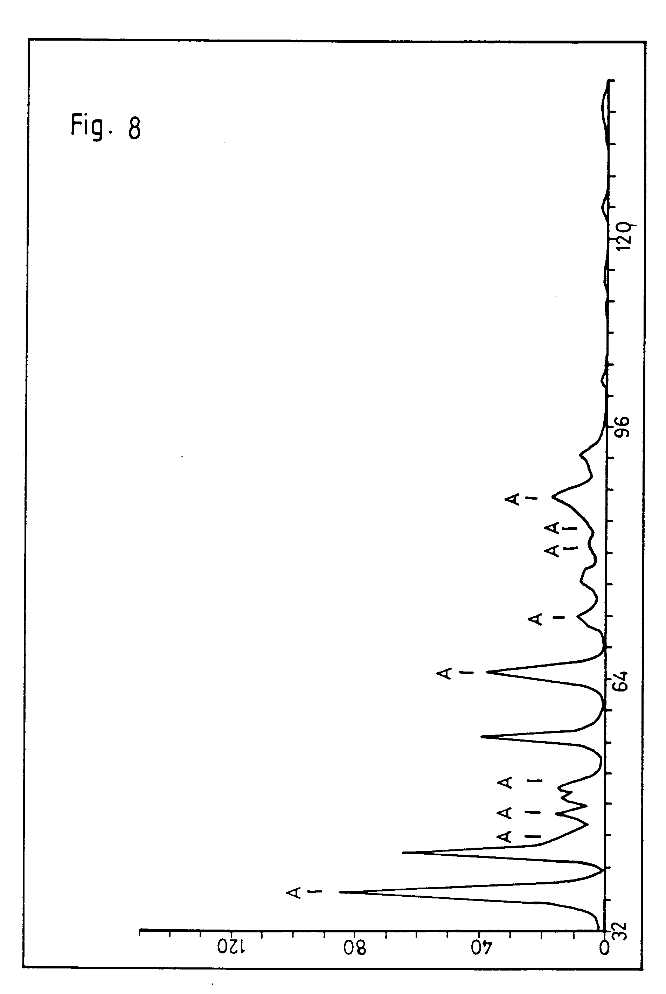

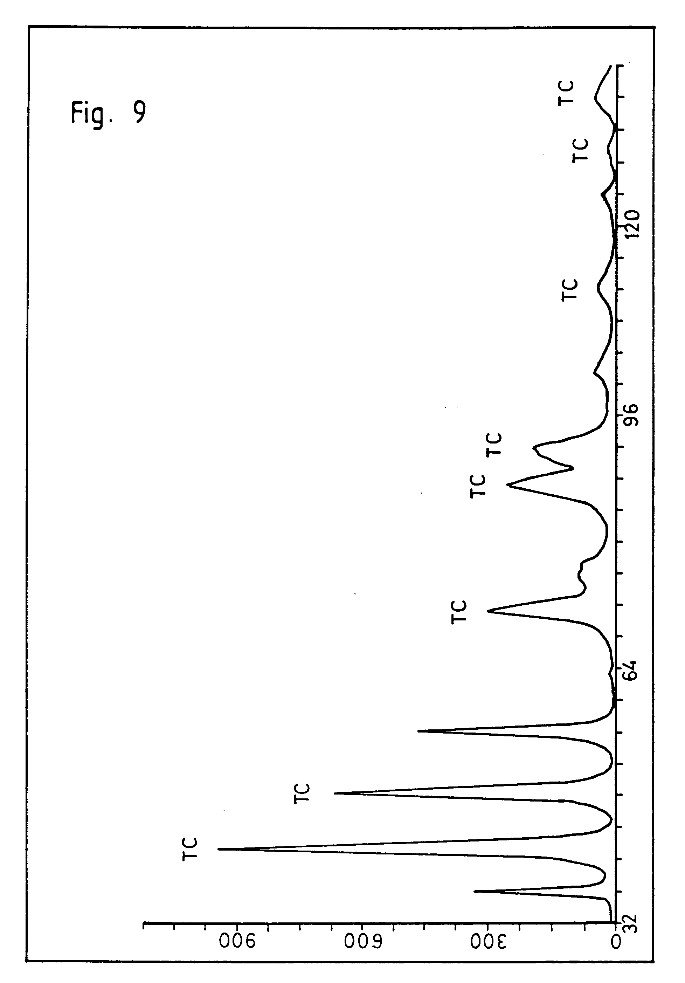

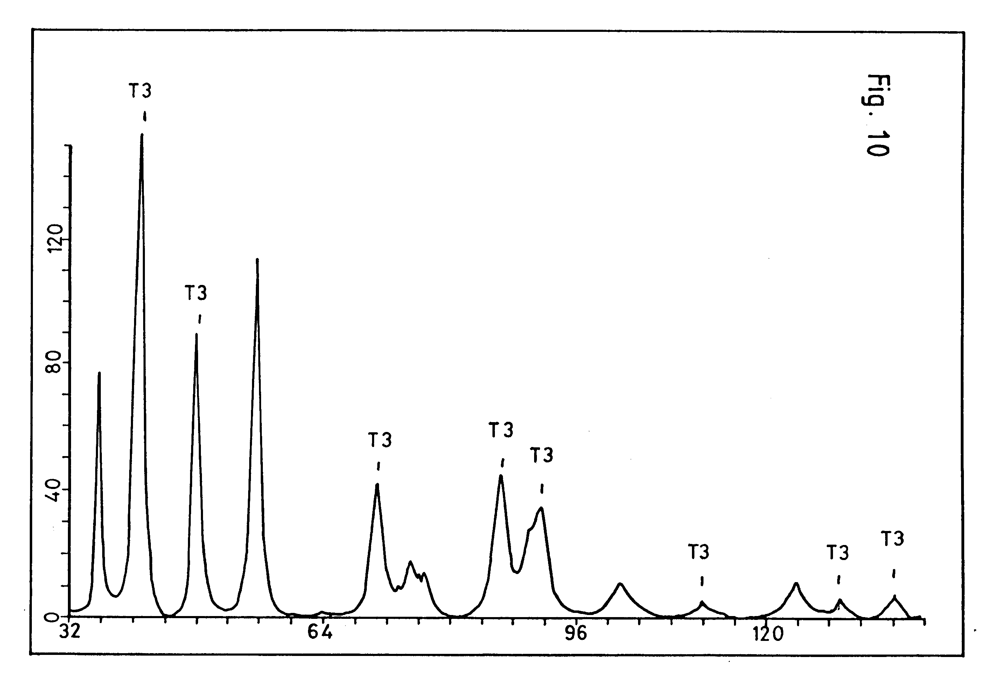

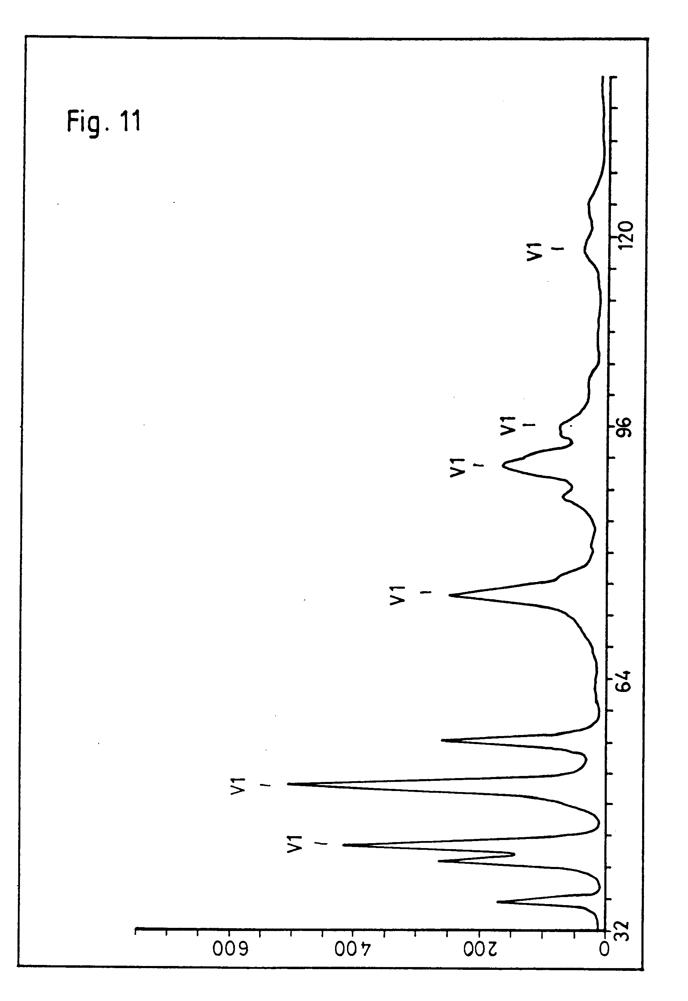

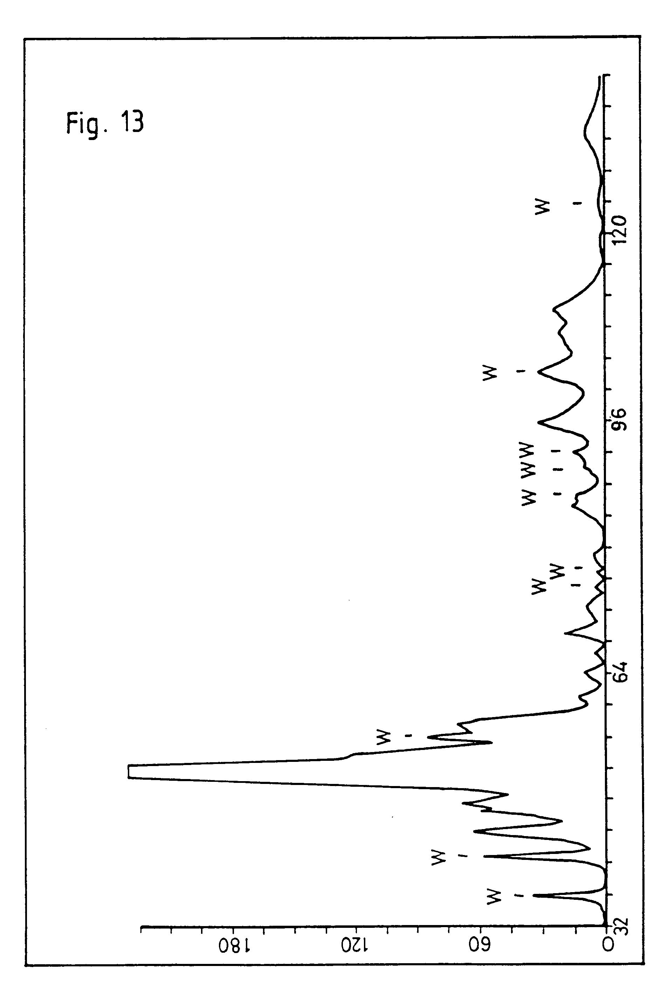

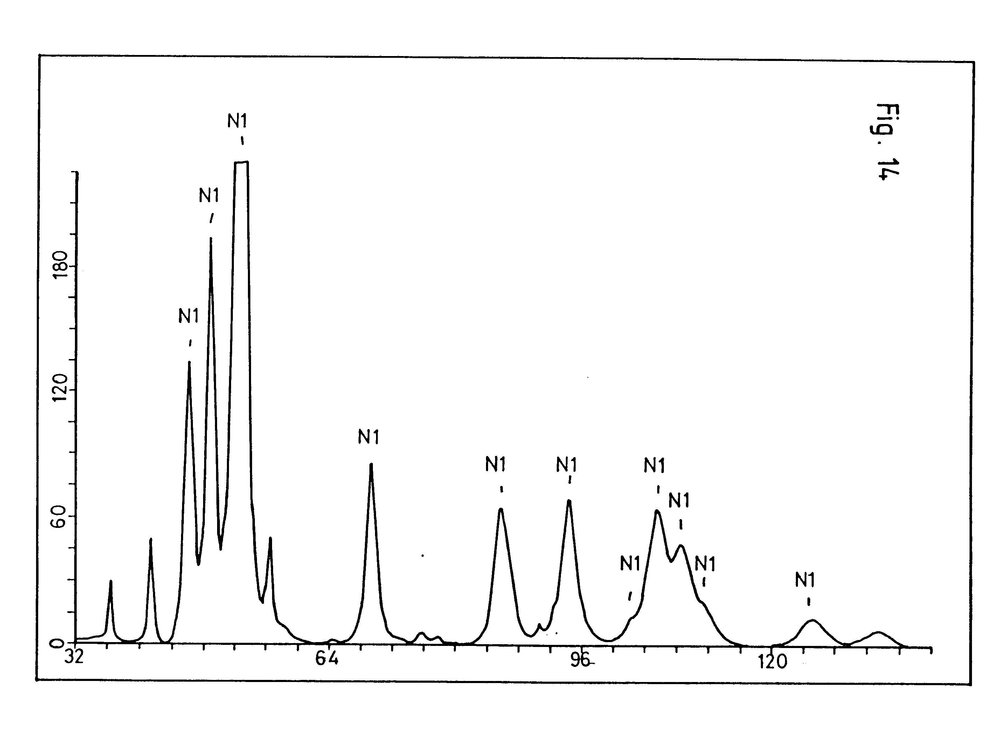

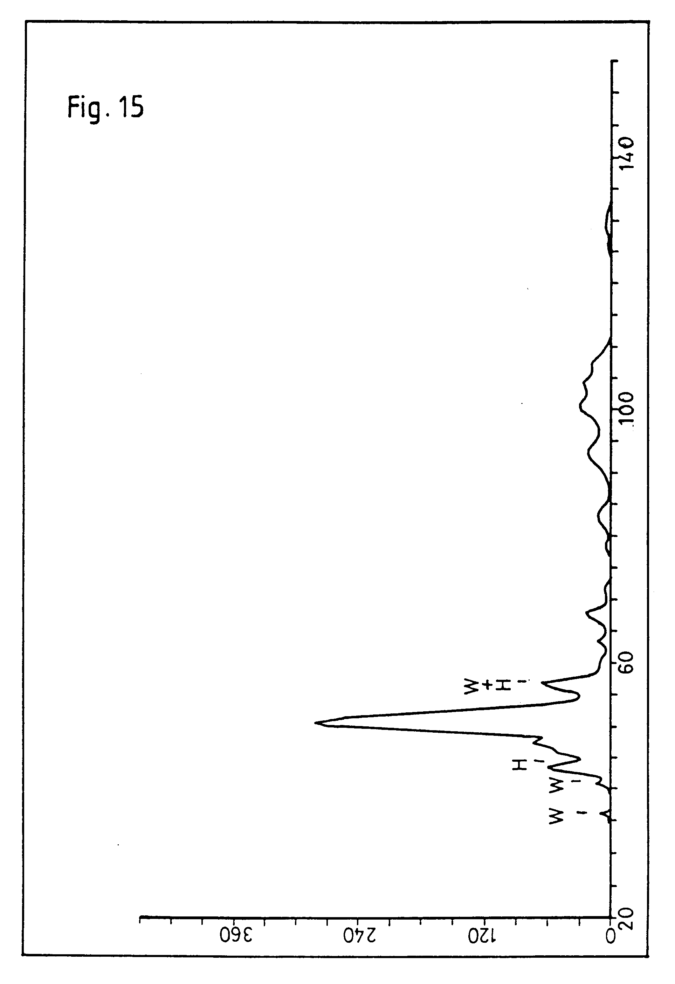

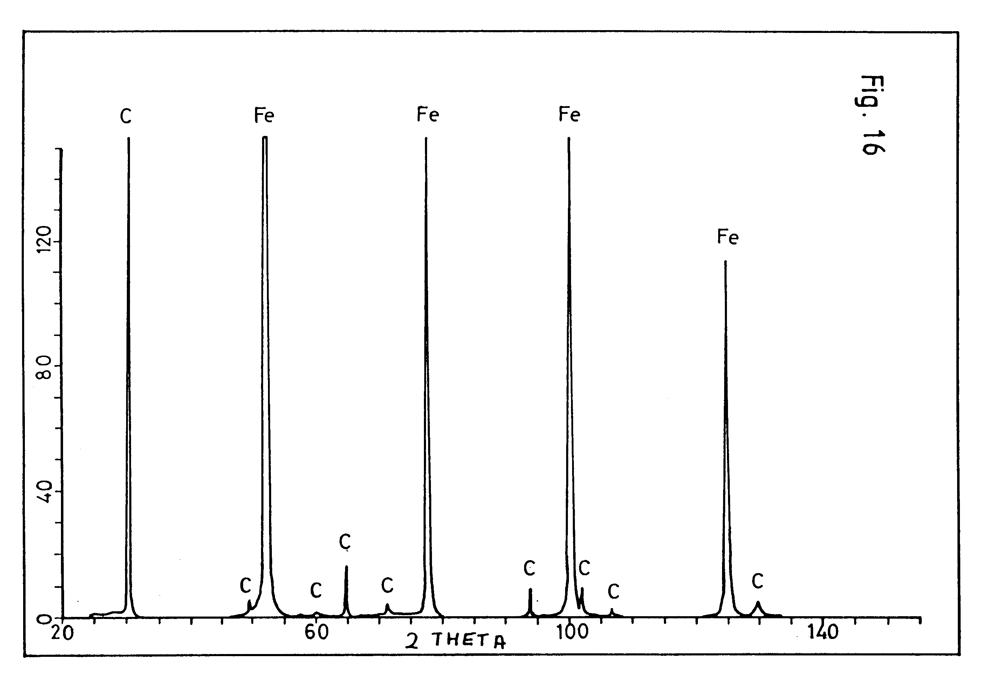

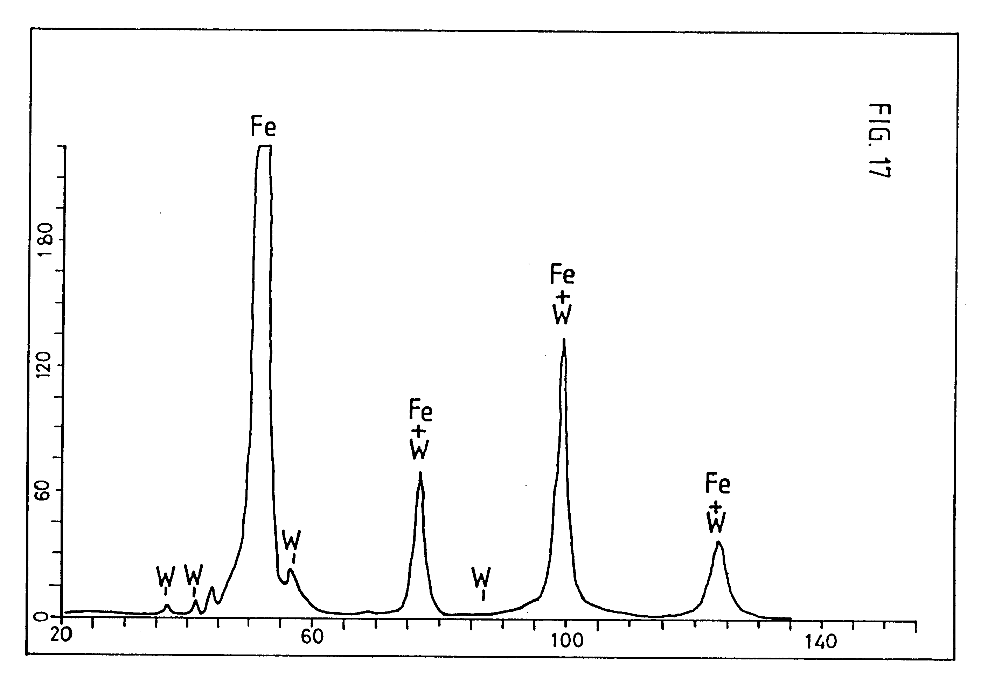

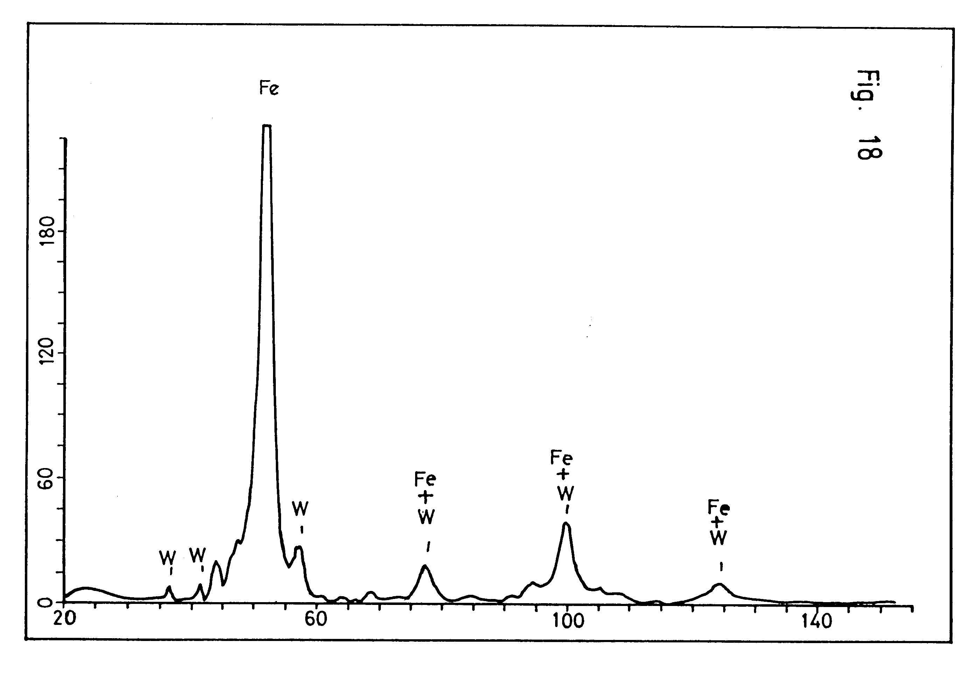

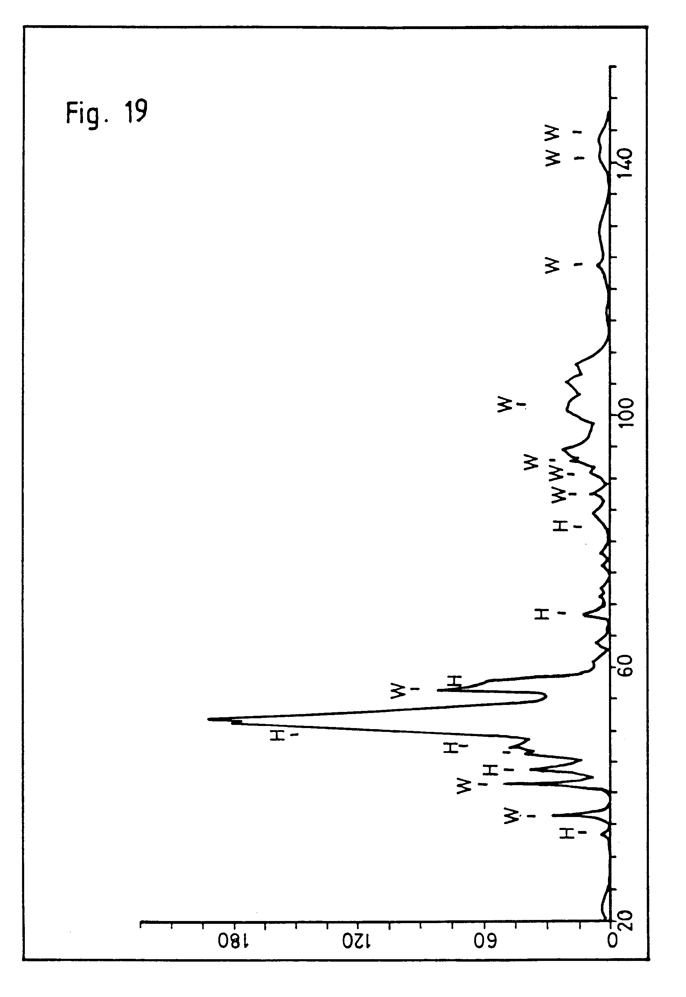

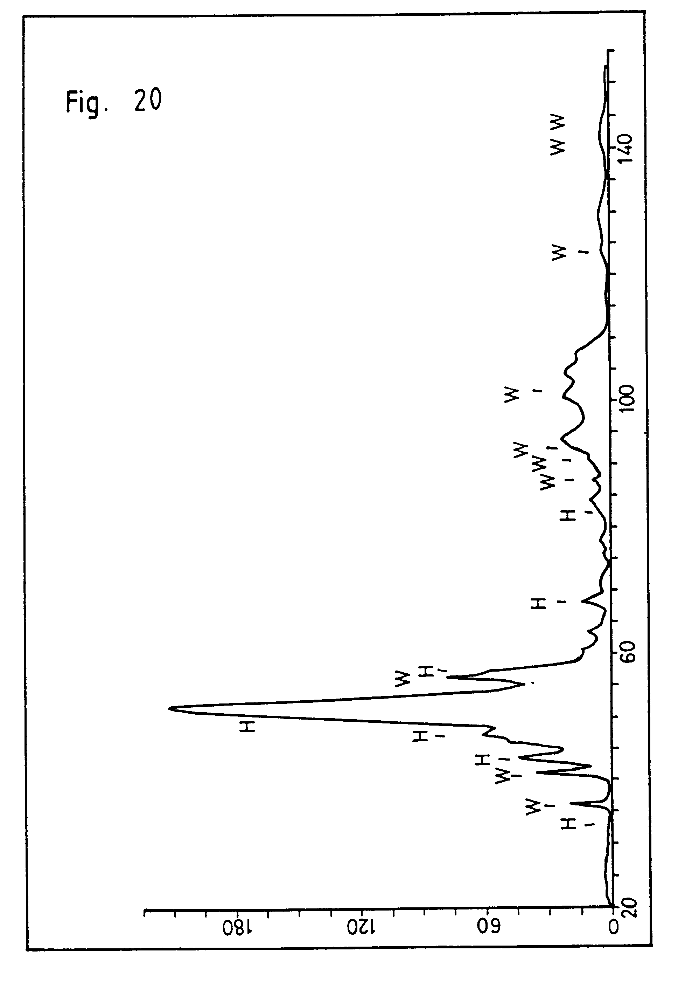

Plus particulièrement, les figures 2 à 11 et 13 à 20 représentent le spectre de diffraction des rayons X (rayonnement K$_{\alpha 1}$ du cobalt, $\lambda = 0,1789$ nm) repectivement pour
-   le mélange initial de silicium et de carbure de l'exemple 1 (figure 2);
-   le produit obtenu après 24 heures de broyage de poudre de graphite dans l'exemple 1 (figure 3);
-   le produit obtenu après 24 heures de broyage du mélange (Si + C) dans l'exemple 1 (figure 4);
-   le produit obtenu après 12 heures de broyage du mélange (Si + C) dans l'exemple 3 (figure 5);
-   le produit obtenu après 24 heures de broyage du mélange (4B + C) dans l'exemple 5 (figure 6);
-   le produit obtenu après 24 heures de broyage du mélange (Si + 4B + C) dans l'exemple 6 (figure 7);
-   le produit obtenu après 24 heures de broyage du mélange (4Al + 3C) dans l'exemple 7 (figure 8);
-   le produit obtenu après 24 heures de broyage du mélange (Ti + C) dans l'exemple 8 (figure 9);
-   le produit obtenu après 24 heures de broyage du mélange (Ti$_{0,862}$ Al$_{0,102}$ V$_{0,036}$) + C dans l'exemple 9 (figure 10);
-   le produit obtenu après 24 heures de broyage du mélange (V + C) dans l'exemple 10 (figure 11);
-   le produit obtenu après 24 heures de broyage du mélange (Co + 3C) dans l'exemple 12 (figure 13);
-   le produit obtenu après 24 heures de broyage du mélange (Ni + 3C) dans l'exemple 13 (figure 14);
-   le produit obtenu après 7 heures de broyage de la cémentite du commerce dans l'exemple 14 (figure 15);
-   le mélange de poudres (80,5 Fe + 19,5C) avant broyage dans l'exemple 15 (figure 16);
-   le produit obtenu après 7 heures de broyage du mélange de l'exemple 15 (figure 17);
-   le produit obtenu après 12 heures de broyage du mélange dans l'exemple 15 (figure 18);
-   le produit obtenu après 24 heures de broyage du mélange de l'exemple 15 (figure 19);
-   le produit obtenu après 48 heures de broyage du mélange de l'exemple 15 (figure 20).

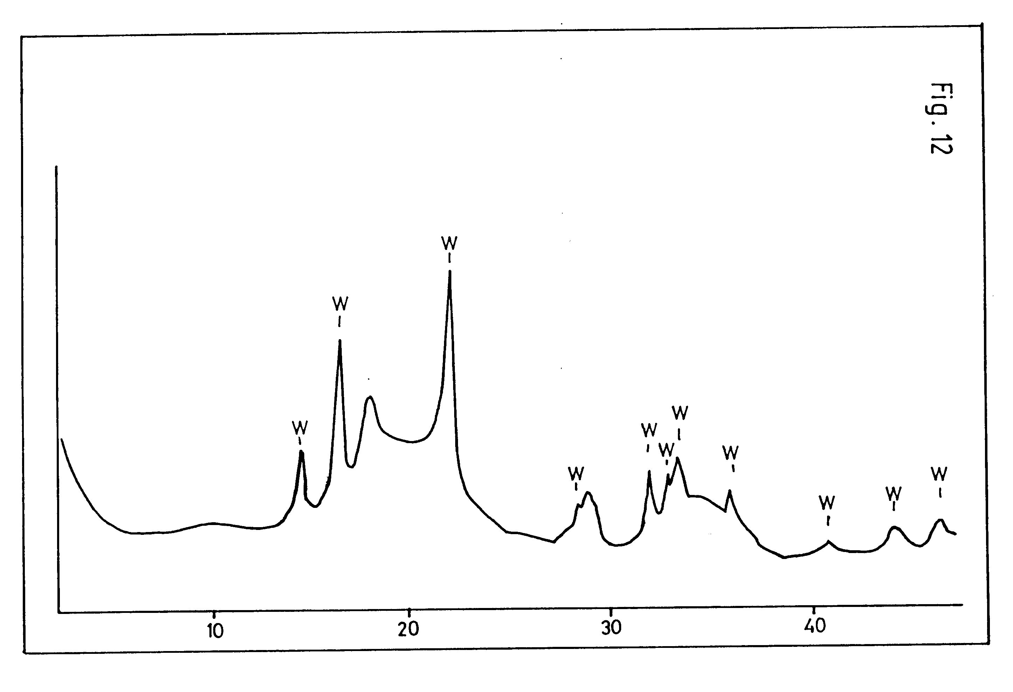

La figure 12 représente le diffractogramme des rayons X (rayonnement K$_{\alpha 1}$ du molybdène, $\lambda = 0,0709$ nm) du produit obtenu après 24 heures de broyage du mélange (3Cr + 2C).

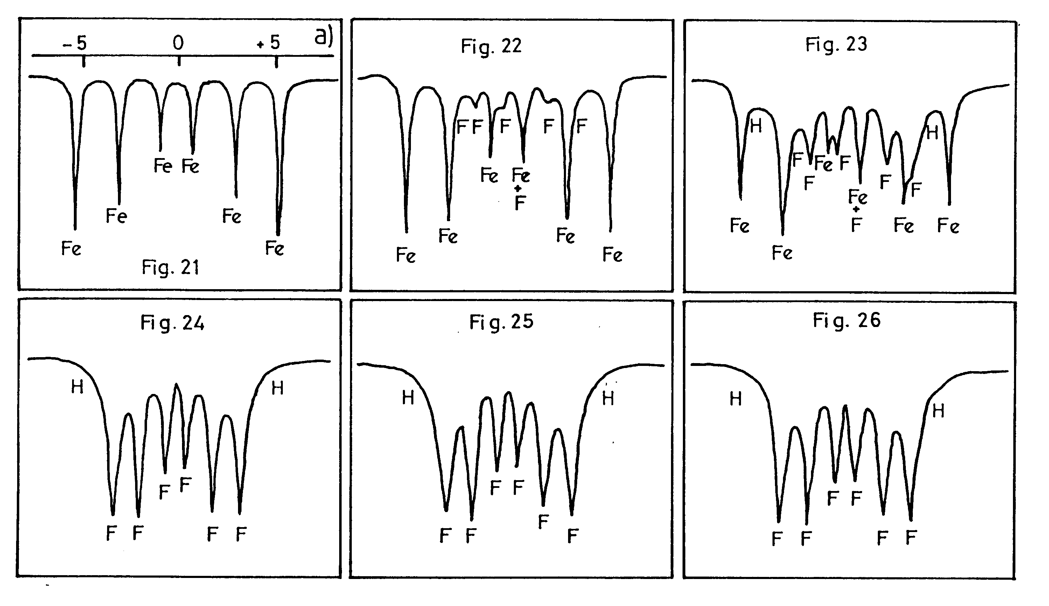

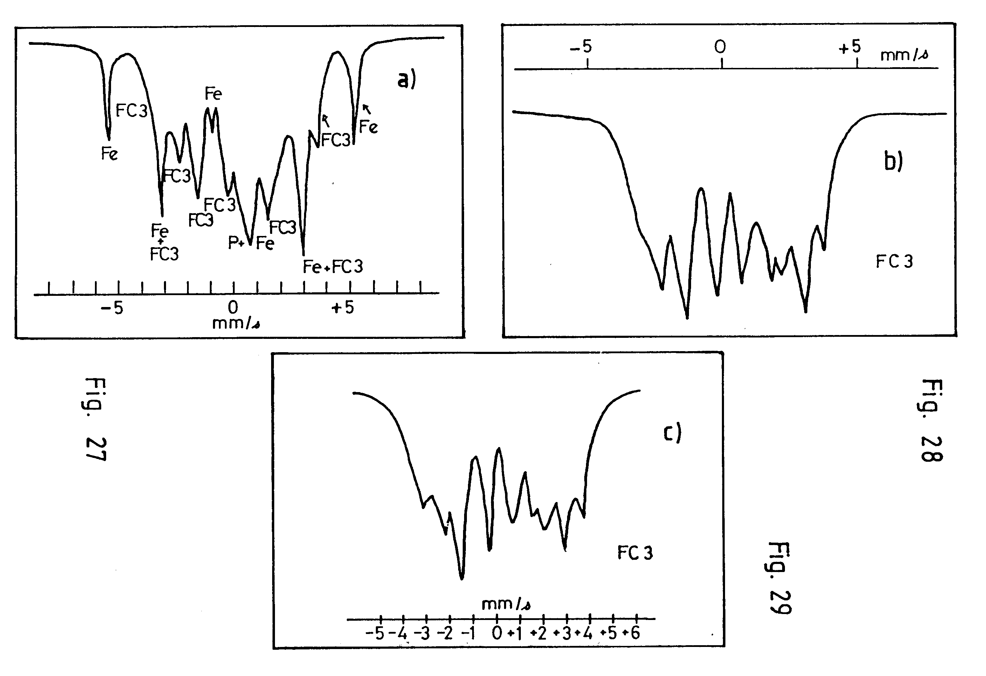

Les figures 21 à 29 représentent les spectres Mössbauer à la température ambiante respectivement pour:
-   le mélange de poudres (80,5 Fe + 19,5C) avant broyage dans l'exemple 15 (figure 21);
-   le produit obtenu après 7 heures de broyage du mélange de l'exemple 15 (figure 22);
-   le produit obtenu après 12 heures de broyage du mélange de l'exemple 15 (figure 23);
-   le produit obtenu après 24 heures de broyage du mélange de l'exemple 15 (figure 24);
-   le produit obtenu après 48 heures de broyage du mélange de l'exemple 15 (figure 25);
-   le produit obtenu après 7 heures de broyage de la cémentite du commerce dans l'exemple 14 (figure 26);
-   le produit obtenu après 24 heures de broyage du mélange (Fe + C) de l'exemple 16 (figure 27);
-   le produit obtenu après 90 heures de broyage du mélange (Fe + C) de l'exemple 16 (figure 28);
-   le produit obtenu par cristallisation de l'alliage amorphe Fe$_{0,55}$ C$_{0,45}$ (E. Bauer-Grosse, G. Le Caer, Philosophical Magazine B 56 (1987) 485-500) (figure 29).

L'échelle des vitesses commune à tous les spectres des figures 21 à 26 est indiquée sur la figure 20.

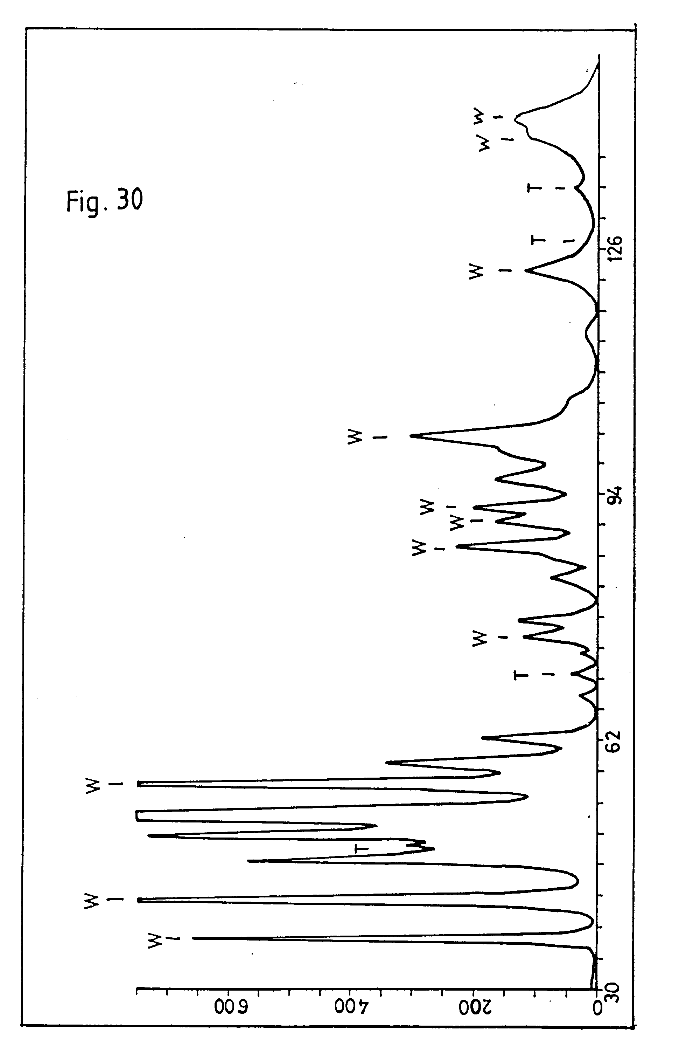

Les figures 30 à 39 représentent le spectre de diffraction des rayons X (rayonnement $K_{\alpha 1}$ du cobalt, $\lambda$ = 0,1789 nm) respectivement pour:

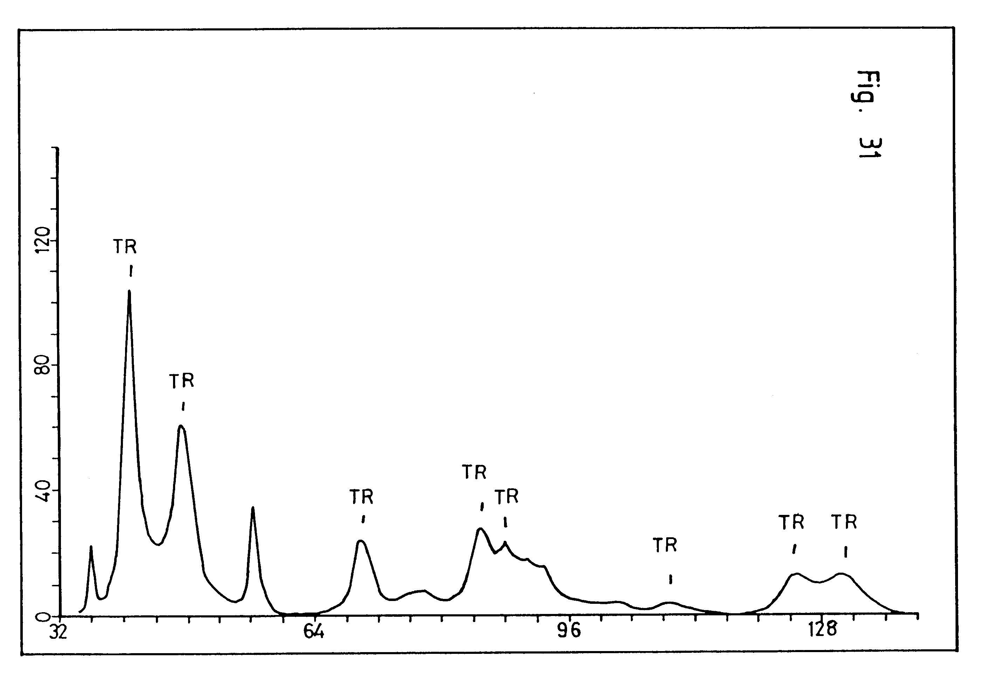

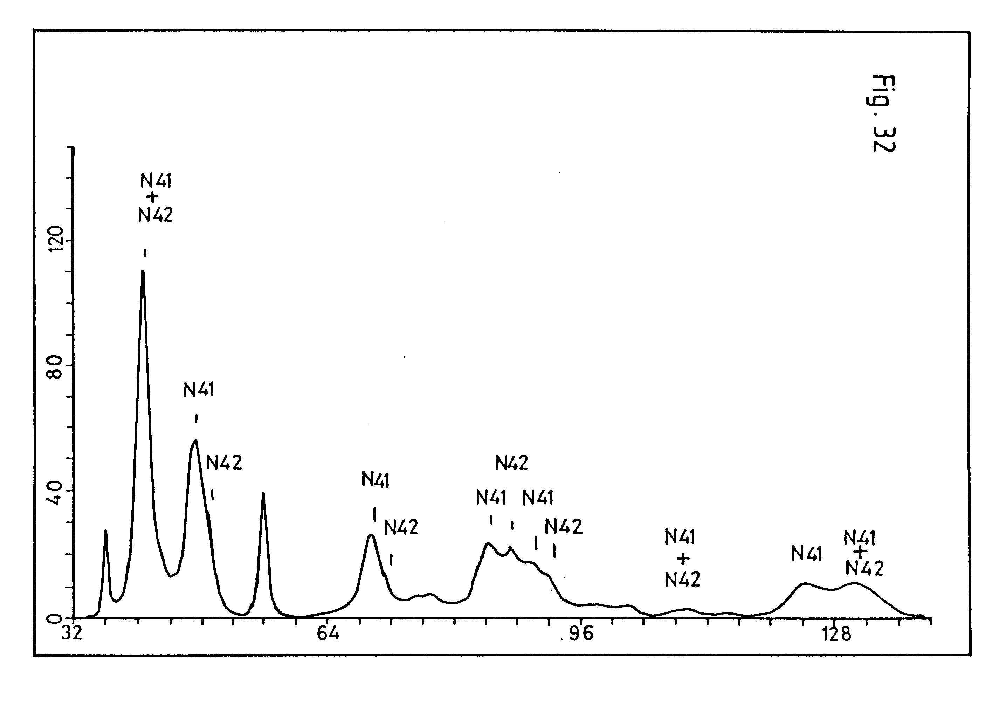

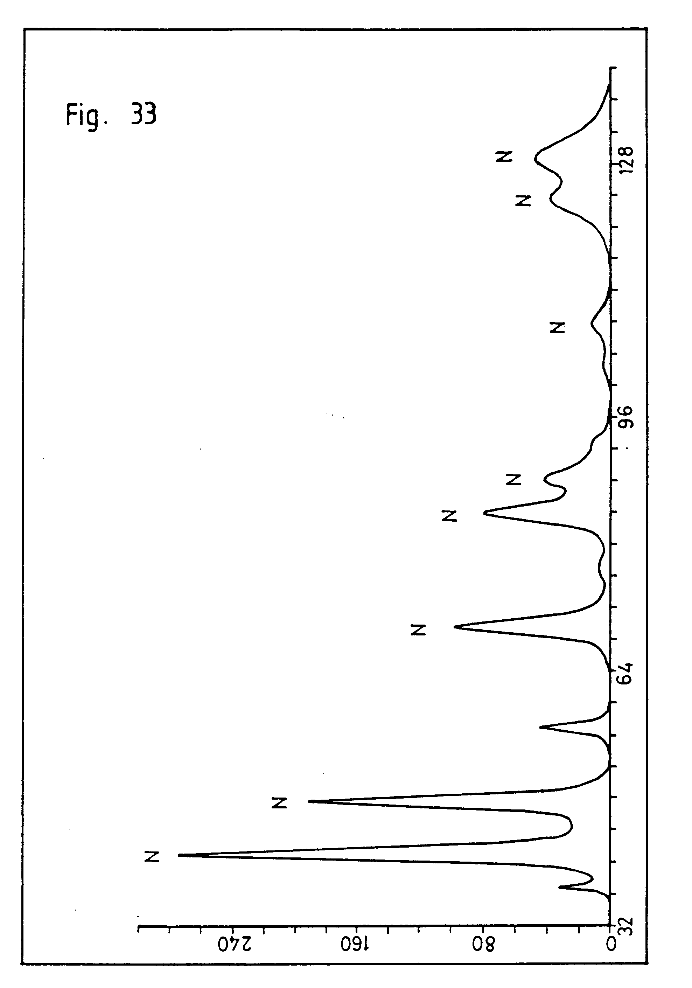

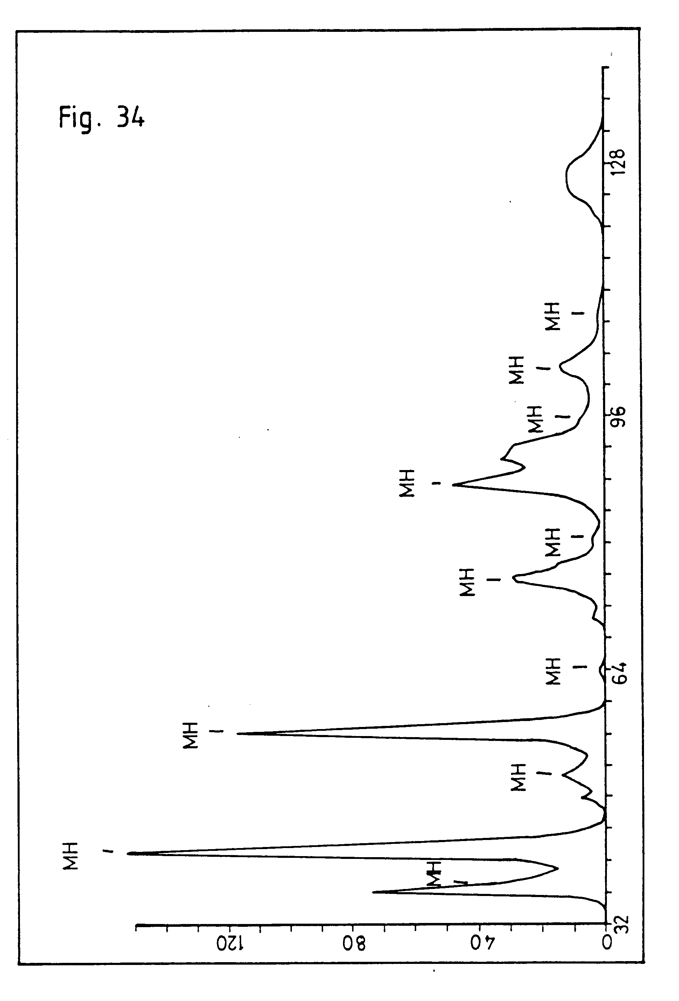

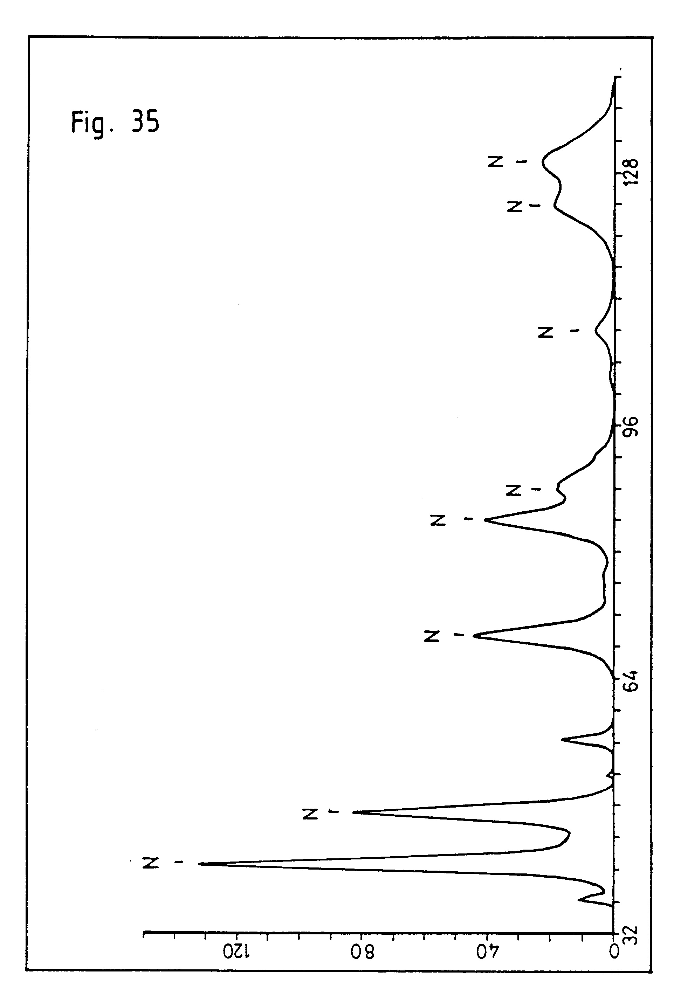

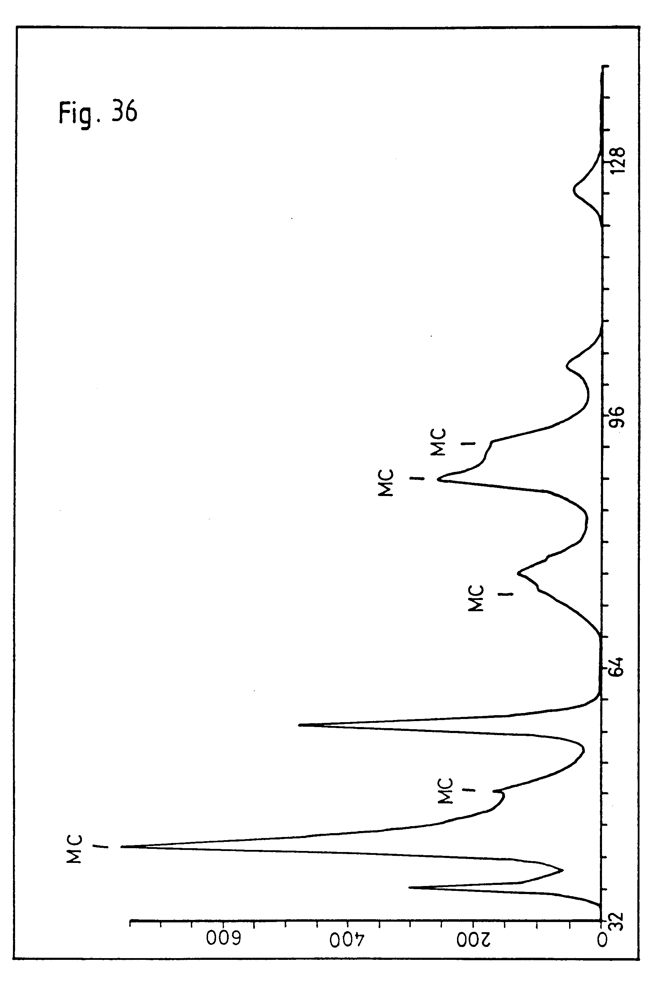

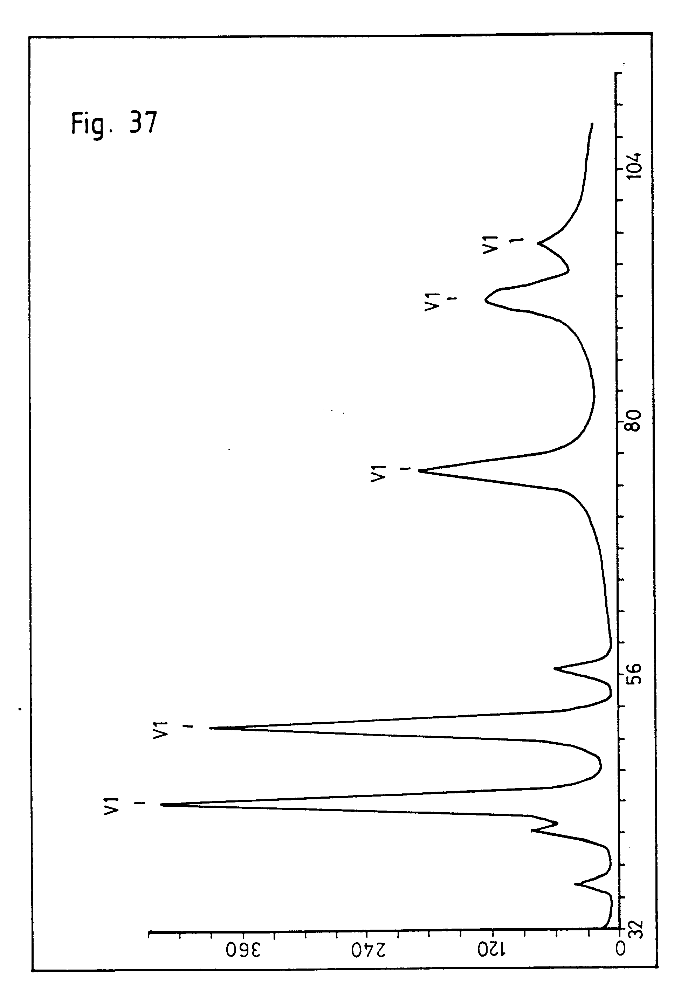

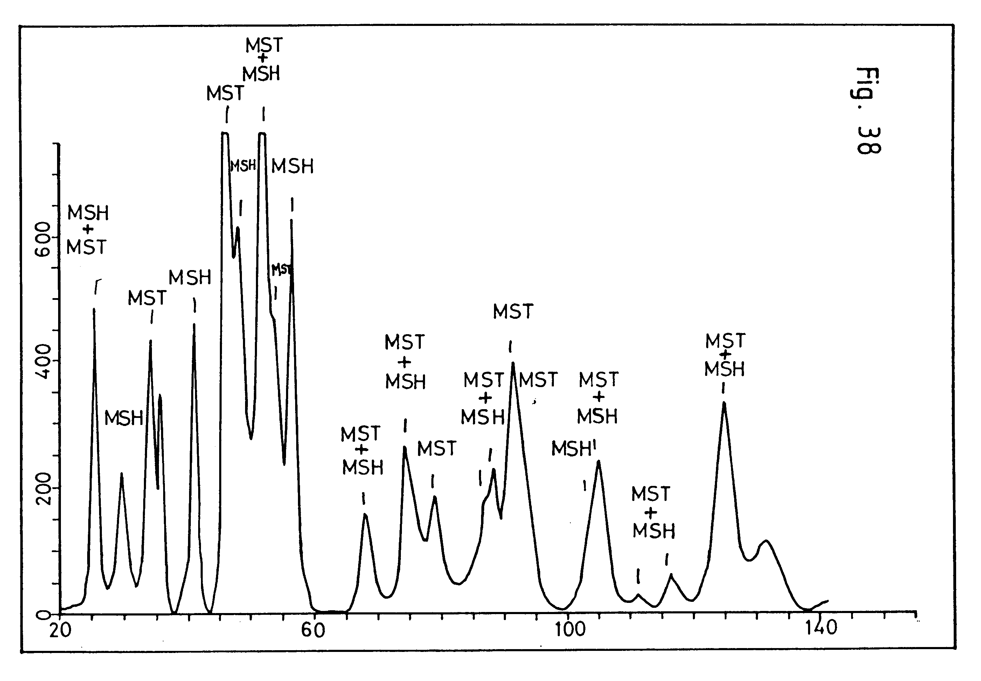

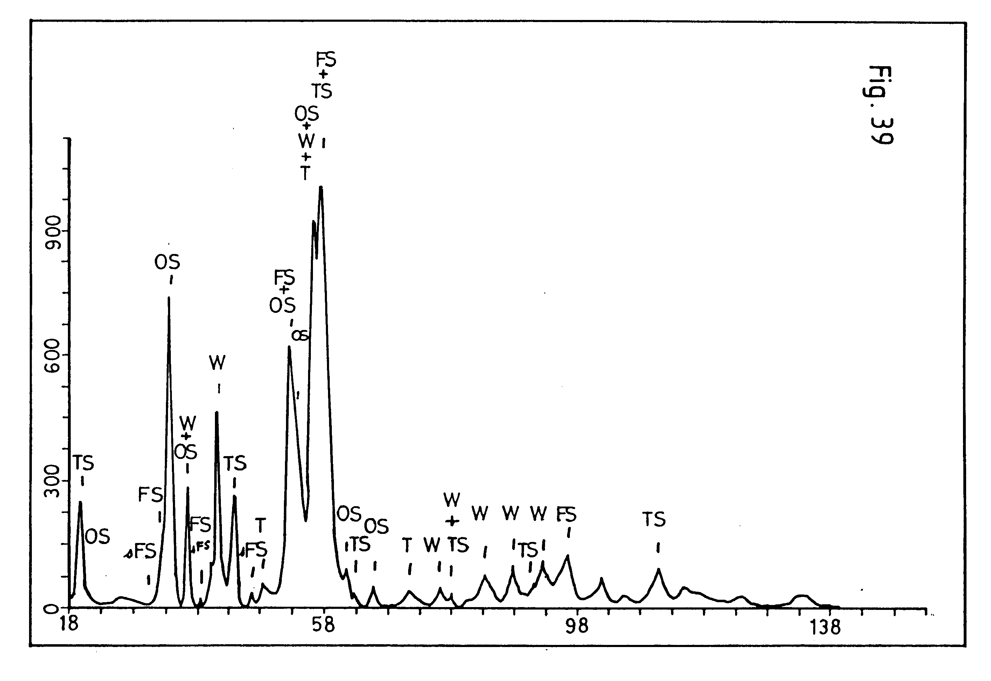

- le produit obtenu après 90 heures de broyage du mélange (Fe + C) dans l'exemple 16 (figure 30);
- le produit obtenu après 24 heures de broyage du mélange (Ta + Re + 2C) dans l'exemple 17 (figure 31);
- le produit obtenu après 24 heures de broyage du mélange (Nb + Ta + Mo + Re + 4C) dans l'exemple 18 (figure 32);
- le produit obtenu après 24 heures de broyage du mélange (Nb + C) dans l'exemple 19 (figure 33);
- le produit obtenu après 24 heures de broyage du mélange (Mo + C) dans l'exemple 20 (figure 34);
- le produit obtenu après 24 heures de broyage du mélange (2Nb + C) dans l'exemple 22 (figure 35);
- le produit obtenu après 24 heures de broyage du mélange (2Mo + C) dans l'exemple 23 (figure 36);
- le produit obtenu après 24 heures de broyage du mélange (2V + C) dans l'exemple 24 (figure 37);
- le produit obtenu après 24 heures de broyage du mélange (Mo + 2Si) dans l'exemple 25 (figure 38);
- le produit obtenu après 24 heures de broyage du mélange (Fe + 2Si) dans l'exemple 26 (figure 39).

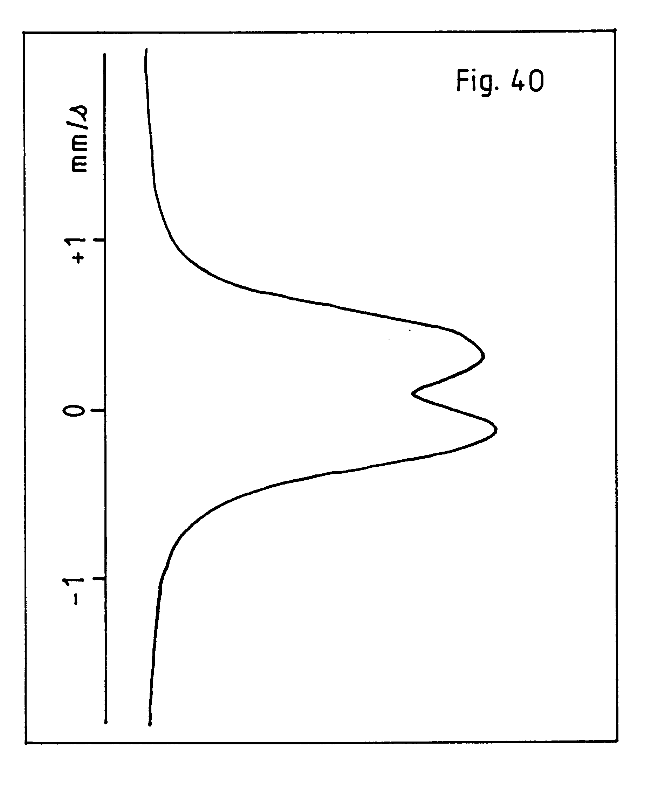

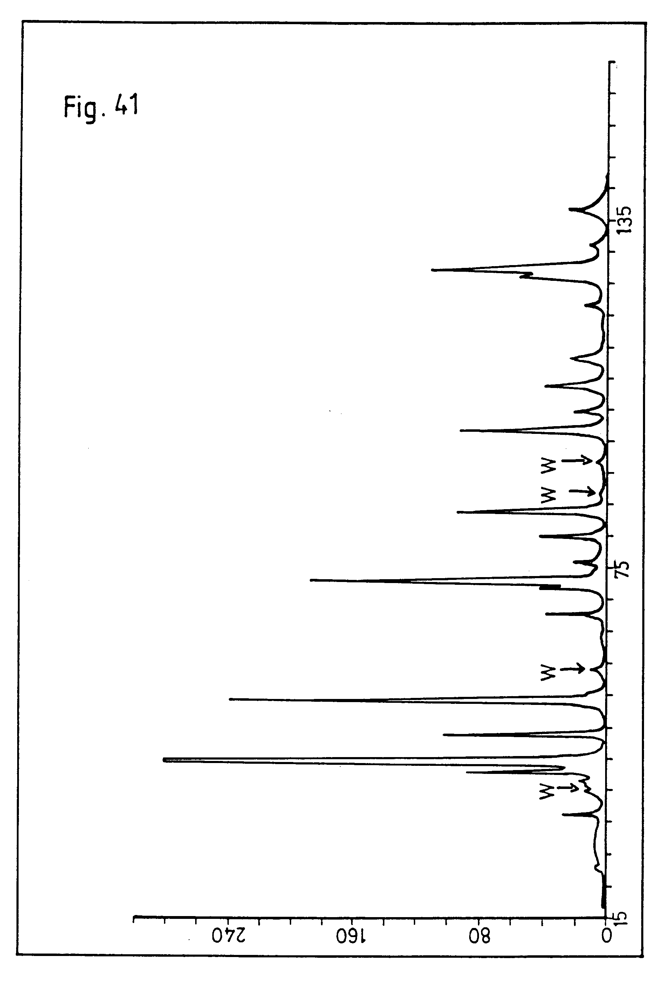

La figure 40 représente le spectre Mössbauer à température ambiante du produit obtenu après 24 heures de broyage du mélange (Fe + 2Si) dans l'exemple 26.

Sur les différentes figures, les raies ont été indexées par des symboles. Le tableau 1 suivant donne la correspondance entre chaque symbole et le composé M,X ou l'élément non lié correspondant.

TABLEAU 1

| W | carbure de tungstène hexagonal du broyeur |
|---|---|
| T | "TiC" (du broyeur) |
| Fe | Fer |
| C | graphite avant et après broyage |
| Si | silicium |
| A | $Al_4 C_3$ |
| B4 | $B_4 C$ |
| SB4 | $SiB_4 C$ |
| S | SiC cubique |
| TC | $TiC_x$ |
| V1 | $VC_x$ |
| H | carbure de fer hexagonal |
| N1 | $Ni_3 C$ |
| N | $NbC_x$ |
| MC | $MoC_x$ |
| MH | $\gamma'$-MoC hexagonal |
| TR | $(Ta_{0,5}Re_{0,5})C_x$ |
| N4 | $(Nb_{0,25}Ta_{0,25}M_{0,25}Re_{0,25})C_x$(dissocié en N41 et N42 pour distinguer les deux carbures cubiques observés sur le même cliché) |
| T3 | $(Ti_{0,862}Al_{0,102}V_{0,036})C$ |
| F | $Fe_3 C$ |
| TS | $FeSi_2$ quadratique |
| OS | $FeSi_2$ orthorhombique |
| FS | FeSi cubique |
| sFS | surstructure de FeSi cubique |
| MST | $MoSi_2$ quadratique |
| MSH | $MoSi_2$ hexagonal |

Dans les figures sur lesquelles n'apparaît que l'indexation en W, la présence de T ("TiC" provenant du broyeur) est sous-entendue. Les raies T ne sont pas indexées lorsqu'elles sont trop faibles.

Les exemples 1 à 7 illustrent la préparation des carbures d'éléments des colonnes III A et IV A. Ces carbures sont constitués de carbone et d'un élément léger. Ils sont très durs et très abrasifs et la poudre finale contient par conséquent le matériau constituant le récipient et les billes, en l'occurence WCh, du cobalt ainsi que "TiC", (désigné dans la suite par WCh + "TiC"). Comme ces éléments sont plus lourds que ceux des carbures d'éléments des colonnes III A et IV A, ils dominent les clichés de diffraction des rayons X. Les raies du cobalt ne sont pas observées car d'une part, elles sont très élargies après broyage, d'autre part elles sont masquées par les raies dues à WCh pour l'essentiel, et à "TiC".

EXEMPLE 1

Préparation de carbure de silicium

Un mélange constitué par une poudre de graphite et une poudre de silicium métallurgique (pureté 97,5%; commercialisé par Goodfellow Metals, GB; dimension moyenne des particules de 5 $\mu$m) dans un rapport atomique de 1/1 a été introduit dans le récipient cylindrique du broyeur sous atmosphère d'argon. Un broyage a été effectué pendant 24 heures. Le rapport en masse des poudres aux billes était de l'ordre de 1/19.

La figure 2 représente le cliché de diffraction au rayons X du mélange C + Si avant broyage. Il comporte les raies spécifiques de C et de Si.

La figure 3 représente le cliché de diffraction des rayons X pour du graphite broyé seul. On y trouve bien les raies de WCh + "TiC".

La figure 4 représente le cliché de diffraction des rayons X du produit obtenu après broyage. Celui-ci ne présente plus les raies de diffraction du graphite et du silicium, mais celles du matériau du récipient et des billes (1,9% du poids des billes a été consommé) et les raies de diffraction de SiC qui ont une largeur de l'ordre de 1° vers $2\theta = 48°$.

La comparaison de l'intensité relative des raies de "TiC" sur les figures 3 et 4 montre qu'il y a bien eu formation de SiC.

Le carbure de silicium formé a une structure cubique de type ZnS avec un paramètre a = 0,4354 ± 0,003 nm. La fiche ASTM 29-1129 donne, pour SiC, a = 0,43589 nm.

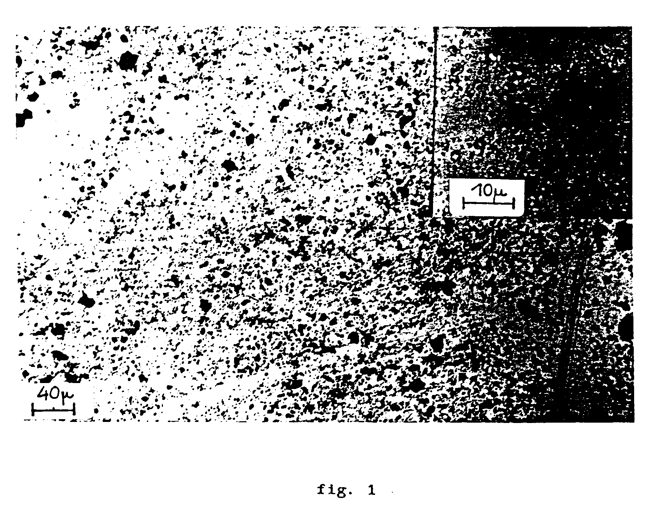

Les poudres obtenues sont constituées essentiellement de particules microniques et submicroniques et d'un certain nombre de particules de quelques dixièmes de mm sur lesquelles sont collées des particules de taille inférieure à 10 $\mu$m. Ces agglomérats se désagrègent par simple frottement manuel entre deux plaques de verre. La taille des particules obtenues est inférieure à environ 1 $\mu$m. La figure 1 représente une vue au microscope optique des poudres obtenues.

EXEMPLE 2

Préparation de carbure de silicium

On a préparé un carbure de silicium à partir de graphite et de silicium très pur (99,999%).

Le silicium massif a été broyé pendant quelques minutes avec 3 billes de tungstène afin de le réduire en poudre. Cette poudre de Si a été mélangée à la poudre de graphite en proportion atomique égale. Le mélange résultant a été broyé pendant 24 heures sous azote.

Le cliché de diffraction des rayons X du produit obtenu après broyage est identique à celui de l'exemple 1.

EXEMPLE 3

Préparation de carbure de silicium

L'exemple 2 a été reproduit en limitant la durée du broyage à 12 heures. La figure 5 représente le cliché de diffraction des rayons X du produit obtenu après broyage. A côté des raies propres à SiC, on observe les raies de diffraction de Si et de C. Une durée de broyage de 12 heures est par conséquent insuffisante pour obtenir une conversion totale de Si et de C en carbure.

EXEMPLE 4

Préparation de carbure de silicium

Les conditions de l'exemple 2 ont été reproduites. Mais le broyage a été effectué à l'air.

Sur le cliché de diffraction des rayons X du produit obtenu après broyage, il n'y a pas trace de silice. Les raies de diffraction de Si et de C n'existent plus, comme dans les exemples 1 et 2. On observe bien les raies de SiC. Il y a eu formation de SiC sans oxydation détectable.

EXEMPLE 5

Préparation de carbure de bore

On a utilisé la poudre de bore LAB Art 12070, Bor Gepulvert B, commercialisée par Merck.

La poudre de graphite et la poudre de bore ont été mélangées dans un rapport atomique de 1/4 et broyées sous azote pendant 24 heures. La masse initiale était de 1,13 g. La masse finale était de 1,53 g, incluant 0,40 g de WCh.

La figure 6 représente le cliché de diffraction des rayons X du produit obtenu après 24 heures de broyage, identifié par les raies les plus intenses, l'une correspondant à ($d = 0,199$ nm, $2\theta = 53,4°$ pour $CoK_{\alpha1}$), l'autre correspondant à ($d = 0,136$ nm, $2\theta = 82°$ pour $CoK_{\alpha1}$). Ces raies ne correspondent pas aux raies du carbure de bore d'équilibre, à savoir $B_4C$. Pour ce dernier composé, les raies intenses sont par exemple (012) à d = 0,379 nm et d = 0,1714 nm.

2,1% des billes sont consommées lors du broyage. Le produit obtenu est très abrasif.

EXEMPLE 6

Préparation du carbure $SiB_4C$

On a utilisé la poudre de bore de l'exemple 5.

La poudre de graphite, la poudre de bore et la poudre de silice ont été mélangées dans un rapport atomique de 1/4/1.

La masse initiale du mélange était de 1 g.

Le rapport en masse de la poudre aux billes était de 1/18.

Le broyage a été effectué pendant 24 heures sous atmosphère d'azote et d'argon.

La masse de produit obtenu était de 1,56 g, incluant 0,56 g de WCh.

La consommation des billes était de 3% en poids. Le produit obtenu est très abrasif.

La figure 7 représente le cliché de diffraction des rayons X du produit obtenu après broyage. Les raies du bore, du carbone et du silicium ne sont plus visibles. A côté des raies spécifiques de WCh et de "TIC", on observe les raies de $SiB_4C$, à savoir, ($d = 0,200$nm, $2\theta = 53,1°$ pour $CoK_{\alpha1}$) et ($d = 0,136$ nm, $2\theta = 82°$ pour $CoK_{\alpha1}$). Comme dans l'exemple précédent, on n'observe pas les raies du composé d'équilibre $SiB_4C$. Seules les raies les plus intenses du carbure formé ont été indiquées. Un nouveau composé a été obtenu.

EXEMPLE 7

Préparation du carbure $Al_4C_3$

La poudre de graphite et la poudre d'aluminium ont été mélangées dans un rapport atomique de 3/4.

La masse initiale du mélange était de 1,14 g.

Le rapport en masse de la poudre aux billes était de 1,14/17,1.

Le broyage a été effectué pendant 24 heures sous atmosphère d'azote.

La figure 8 représente le cliché de diffraction des rayons X du produit obtenu après broyage. Les raies correspondent à celles de $Al_4C_3$ hexagonal (fiche ASTM 11-629: a = 0,3331 nm, c = 2,499 nm).

Les exemples 8 à 24 illustrent la préparation de carbures d'éléments de transition, contenant éventuellement un élément des colonnes III A ou IV A.

EXEMPLE 8

Préparation de carbure de titane

On a utilisé une poudre de titane de Goodfellow Metals, GB.

La poudre de graphite et la poudre de titane ont été mélangées dans un rapport atomique de 1/1.

La masse initiale du mélange était de 1,7 g.

Le rapport en masse de la poudre aux billes était de 1,7/18,5.

Le broyage a été effectué pendant 24 heures sous atmosphère d'azote .

La consommation des billes était de 2,5% en poids.

La figure 9 représente le cliché de diffraction des rayons X du produit obtenu après broyage. Seules les raies du carbure de titane ont été indexées.

Les raies attribuées à TiC dans la fiche ASTM 31-1401 sont toutes observées. Le paramètre calculé est a = 0,4311 ± 0,0002 nm.

EXEMPLE 9

Préparation de carbure $Ti_{0,862}Al_{0,102}V_{0,036}C_x$

On a utilisé une poudre d'alliage TiAlV contenant 90% en poids de Ti, 6% en poids d'Al et 4% en poids de V.

La poudre de graphite et la poudre métallique ont été mélangés dans un rapport atomique de 1/1.

La masse initiale du mélange était de 1,3 g.

Le rapport en masse de la poudre aux billes était de 1,3/18.

Le broyage a été effectué pendant 24 heures sous atmosphère d'azote .

La masse de produit obtenu était de 1,78 g, incluant 0,48 g de WCh.

La consommation des billes était de 2,7% en poids.

La figure 10 représente le cliché de diffraction des rayons X du produit obtenu après broyage. Elle montre, à côté des raies spécifiques de WCh, les raies propres à un carbure mixte de Ti, Al et V dont la structure est du type NaCl avec un paramètre a = 0,43122±0,00015 nm, très voisin du paramètre a = 0,43176 nm du carbure de titane de type NaCl.

Les raies de l'alliage Ti,Al,V ne sont plus visibles.

EXEMPLE 10

Préparation de carbure de vanadium

On a utilisé une poudre de vanadium.

La poudre de graphite et la poudre de vanadium ont été mélangées dans un rapport atomique de 1/1.

La masse initiale du mélange était de 2,05 g.

Le rapport en masse de la poudre aux billes était de 2/19.

Le broyage a été effectué pendant 24 heures sous atmosphère de d'azote.

La consommation de billes est plus faible que lors de la préparation du carbure de l'exemple 9.

La figure 11 représente le cliché de diffraction des rayons X du produit obtenu après broyage.

A côté des raies correspondant à WCh, les raies attribuées à VC (14%C) dans la fiche ASTM 1-1159 sont toutes observées. Celles-ci correspondent aussi aux raies les plus intenses de $V_8C_7$ (fiche ASTM 25-1001 a = 0,8334 nm) ou de $V_{32}C_{28}$ (fiche ASTM 23-1468 a = 0,8335 nm).

EXEMPLE 11

Préparation de carbure $Cr_3C_2$

La poudre de graphite et la poudre de chrome ont été mélangées dans un rapport atomique de 2/3.

La masse initiale du mélange était de 2,47 g.

Le rapport en masse de la poudre aux billes était de 2,47/19.

Le broyage a été effectué pendant 24 heures sous atmosphère d'argon .

La masse de produit obtenu était de 2,62 g, incluant 0,15 g de WCh.

La consommation des billes était de 0,78%.

La figure 12 représente le cliché de diffraction des rayons X du produit obtenu après broyage. Les raies les plus intenses ($2\theta$ = 17,8°, d = 0,23 nm) et $2\theta$ = 18,2°, d = 0,223 nm) sont celles du composé d'équilibre $Cr_3C_2$. Les raies du chrome métallique cubique centré ne sont plus observées. Seules les raies dues à WCh ont été indiquées.

EXEMPLE 12

Préparation de carbure de cobalt $Co_3C$

La poudre de graphite et la poudre de cobalt ont été mélangées dans un rapport atomique de 1/3.
La masse initiale du mélange était de 3,3 g.
Le rapport en masse de la poudre aux billes était de 1/6.
Le broyage a été effectué pendant 24 heures sous atmosphère d'argon.
La masse de produit obtenu était de 3,42 g, incluant 0,12 g de WCh.
La consommation des billes était de 0,8%.
La figure 13 représente le cliché de diffraction des rayons X du produit obtenu après broyage. A côté des raies de WCh, les raies de $Co_3C$, de même structure que la cémentite $Fe_3C$, sont visibles. Elles révèlent une structure orthorhombique, groupe d'espace Pbnm avec $a = 0,4444$ nm, $b = 0,4993$ nm, $c = 0,6707$ nm (en conformité avec la fiche ASTM 26-450). Seules les raies dues à WCh ont été indiquées.

EXEMPLE 13

Préparation de carbure de nickel $Ni_3C$

La poudre de graphite et la poudre de nickel ont été mélangées dans un rapport atomique de 1/3.
La masse initiale du mélange était de 3,33 g.
Le rapport en masse de la poudre aux billes était de 1/6.
Le broyage a été effectué pendant 24 heures sous atmosphère d'argon.
La masse de produit obtenu était de 3,51 g, incluant 0,18 g de WCh.
La consommation des billes était de 0,96%.
La figure 14 représente le cliché de diffraction des rayons X du produit obtenu après broyage. Il révèle la présence, à côté d'une petite quantité de WCh , de carbure $\epsilon$-$Ni_3C$ de structure hexagonale (conforme à la fiche ASTM 6-0697), groupe d'espace R $\bar{3}$c (Nagakura, Oketani).
Les distances $d_{hkl}$ sont calculées avec $a = 0,2636 \pm 0,0002$ nm et $c = 0,4332 \pm 0,0004$ nm, alors que la fiche ASTM donne $a = 0,26502$ nm et $c = 0,43383$ nm.
Le carbure obtenu est stable aux températures inférieures à 430°C.
Les exemples suivants illustrent la préparation de divers carbures de fer.

EXEMPLE 14

Broyage de cémentite du commerce

A titre de comparaison, une cémentite du commerce, qui contient essentiellement $Fe_3C$, du fer et un carbonitrure, a été broyée pendant 7 heures.
Le cliché de diffraction des rayons X (figure 15) et le spectre Mössbauer (figure 26) montrent que le fer libre a été carburé totalement et que le produit obtenu contient $Fe_3C$ et du carbure de fer hexagonal. Seules les raies clairement observées du carbure de fer hexagonal et de WCh ont été indiquées que le cliché de rayons X.

EXEMPLE 15

Préparation de carbure de fer (cémentite)

La poudre de graphite et la poudre de fer ont été mélangées dans un rapport atomique de 19,5/80,5. La masse initiale du mélange était de 3 g et le rapport en masse de la poudre aux billes était de 3/19.
Les figures 16 et 21 représentent respectivement le cliché de diffraction des rayons X et le spectre Mössbauer du mélange des poudres avant broyage.
Quatre essais ont été effectués dans les conditions précitées avec des durées de broyage sous azote respectivement de 7 heures, 12 heures, 24 heures et 48 heures.
Les figures 17, 18, 19 et 20 représentent respectivement les clichés de diffraction des rayons X du produit obtenu après 7, 12, 24, 48 heures de broyage. Seules les raies du fer , du carbure de fer hexagonal et de WCh ont été indexées.

10

Les figures 22, 23, 24 et 25 représentent respectivement les spectres Mössbauer après 7, 12, 24 et 48 heures de broyage. Sur ces spectres, pour le carbure de fer hexagonal, seules les raies 1 et 6 ont été indexées.

L'examens des différentes figures fait apparaître que:

- après 7 heures de broyage, il y a formation de carbure de fer présentant des paramètres hyperfins voisins de ceux de la cémentite, avec présence de défauts et de carbure hexagonal;
- après 12 heures, il existe toujours du fer non carburé et un carbure hexagonal;
- après 24 heures, le fer est totalement carburé; on note des traces de WCh, des pics caractérisitiques du carbure hexagonal à 0,239 nm et les raies caractéristiques de la cémentite;
- après 48 heures, la seule différence par rapport au produit obtenu après 24 heures de broyage est une augmentation de la densité des défauts.

Il est par conséquent possible, en mettant en oeuvre le procédé de l'invention, d'obtenir un carbure de fer contenant de la cémentite et du carbure de fer hexagonal, à partir de poudre de graphite et de poudre de fer dans un rapport 20/80, après 24 heures de broyage.

Un résultat analogue a été obtenu à partir d'un mélange de poudres dans un rapport C/Fe = 1/3.

EXEMPLE 16

Préparation de carbure de fer

La poudre de graphite et la poudre de fer ont été mélangées dans un rapport atomique de 50/50.

La masse initiale du mélange était de 2,4 g.

Le rapport en masse de la poudre aux billes était de 2,4/19.

Deux essais ont été effectués dans les conditions ci-dessus, avec une durée de broyage respectivement de 24 et de 48 heures sous atmosphère d'argon.

La figure 27 représente le spectre Mössbauer du mélange de poudres après 24 heures de broyage. Un spectre semblable est obtenu après 48 heures de broyage.

La carburation n'est pas totale: le $Fe_\alpha$ est observé en Mössbauer; le graphite est observé en diffraction X: Il y a eu formation du carbure $Fe_7C_3$ et d'un nouveau composé non magnétique (marqué P sur la figure 27) à la température ambiante bien visible sur le spectre Mössbauer.

Un troisième essai a été effectué dans les mêmes conditions mais avec un rapport en masse de la poudre aux billes de 2,4/18,4 et une durée de broyage de 90 heures sous atmosphère d'azote. La masse du produit obtenu était de 2,6 g incluant 0,2 g de matériau provenant du broyeur et une consommation de billes de 1,1%. Le fer $\alpha$ et le nouveau composé paramagnétique ne sont plus observés. Seul le carbure $Fe_7C_3$ est observé sur le spectre Mössbauer (fig. 28). Le cliché de rayons X (fig.30) montre, à côté des raies WCh + "TiC", les raies caractéristiques de $Fe_7C_3$.

La figure 29 montre le spectre Mössbauer d'un carbure $Fe_7C_3$ obtenu par la cristllisation d'un alliage amorphe $Fe_{0,55}C_{0,45}$ (E. Bauer-Grosse, G. Le Caer, Philosophical Magazine B 56 (1987) 485-500). La comparaison des fig. 28 et 29 permet de conclure à l'existence d'une grande densité de défauts dans le carbure préparé par broyage.

EXEMPLE 17

Préparation du carbure $Ta_{0,5}Re_{0,5}C$

La poudre de graphite, la poudre de Ta et la poudre de Re ont été mélangées dans un rapport atomique de 50/25/25.

La masse initiale du mélange était de 2,85 g.

Le rapport en masse de la poudre aux billes était de 2,85/17,8.

Le broyage a été effectué sous azote pendant 24 heures. La consommation de billes était de 0,4 g.

La figure 31 représente le cliché de diffraction des rayons X. Les raies spécifiques de Ta et Re ont disparu. Le carbure obtenu a une structure cubique type NaCl avec un paramètre a = 0,4416±0,0002 nm.

EXEMPLE 18

Préparation du carbure $Nb_{0,25}Ta_{0,25}Mo_{0,25}Re_{0,25}C$

La poudre de graphite, les poudres de Nb, de Ta, de Mo et de Re ont été mélangées dans un rapport atomique de 1/0,25/0,25/0,25/0,25.

La masse initiale du mélange était de 2,2 g.

Le rapport en masse de la poudre aux billes était de 2,2/14.

Le broyage a été effectué sous azote pendant 24 heures. La consommation de billes était de 0,36 g, soit 2,5% du poids des billes.

La figure 32 représente le cliché de diffraction des rayons X. Les raies spécifiques des éléments métalliques de départ ont disparu. La carburation est totale. Deux carbures cubiques du type NaCl sont obtenus, identifiés respectivement par N41 et N42 sur la fig. 32.

EXEMPLE 19

Préparation du carbure de niobium

La poudre de graphite et la poudre de niobium ont été mélangées dans un rapport atomique de 1/1.

La masse initiale du mélange était de 2,9 g.

Le rapport en masse de la poudre aux billes était de 2,9/15.

Le broyage a été effectué pendant 24 heures sous atmosphère d'azote .

La masse de produit obtenu était de 3,12 g, incluant 0,22 g de WCh.

La figure 33 représente le cliché de diffraction des rayons X du produit obtenu après broyage. Tout le niobium est carburé. Le paramètre cristallin calculé d'après le cliché de diffraction est a = 0,4441±0,0001 nm, correspondant à un carbure $NbC_{0,75}$ (Cf. "E.K. Storms" précité).

EXEMPLE 20

Préparation de carbure de molybdène hexagonal

La poudre de graphite et la poudre de molybdène ont été mélangées dans un rapport atomique de 1/1.

La masse initiale du mélange était de 1,6 g.

Le rapport en masse de la poudre aux billes était de 1,6/16,6.

Le broyage a été effectué pendant 24 heures sous atmosphère d'azote .

La masse de produit obtenu était de 2,42 g, incluant 0,82 g de WCh.

La figure 34 représente le cliché de diffraction des rayons X du produit obtenu après broyage. Tout le molybdène est carburé. Il se forme un carbure $\gamma'$-MoC hexagonal dont les paramètres a = 0,2915 ± 0,0003 nm et c = 1,109 ± 0,003 nm sont en bon accord avec la fiche ASTM 6-0546 (a = 0,2932 nm et c = 1,097 nm) pour la phase $\gamma'$-MoC, phase de basse température.

EXEMPLE 21

Préparation de carbure $Mn_3C$

La poudre de graphite et la poudre de manganèse ont été mélangées dans un rapport atomique de 1/3.

La masse initiale du mélange était de 2,9 g.

Le rapport en masse de la poudre aux billes était de 2,9/19.

Le broyage a été effectué pendant 24 heures sous atmosphère d'azote .

La masse de produit obtenu était de 2,9 g.

La consommation des billes était nulle à la précision des mesures.

Le cliché de diffraction des rayons X montre qu'il s'est formé le carbure $Mn_3C$ de structure type cémentite.

EXEMPLE 22

Préparation de carbure de niobium $Nb_2C$

La poudre de graphite et la poudre de niobium ont été mélangées dans un rapport atomique de 1/2.
La masse initiale du mélange était de 3,2 g.
Le rapport en masse de la poudre aux billes était de 3,2/17,8.
Le broyage a été effectué pendant 24 heures sous atmosphère d'azote .
La masse de produit obtenu était de 3,5 g, incluant 0,3 g de WCh + "TiC".
La consommation des billes était de 1,7%.
La figure 35 représente le cliché de diffraction des rayons X du produit obtenu après broyage. Les raies dues à WCh + "TiC" sont peu intenses, conformément à la faible consommation de billes. Les raies s'indexent avec une structure cubique type NaCl de paramètre a = 0,4422 nm. Cette structure diffère de celle du carbure $Nb_2C$ orthorhombique (Pnma) selon "E.K. Storms" précité. Le paramètre de réseau observé est cohérent avec la variation en composition présentée par Storms, extrapolée vers une teneur en carbone plus basse pour des carbures cubiques (type NaCl) $NbC_x$. Jusqu'à présent, x était compris entre 0,71 et 0,99 (Cf. C.H. De Novion et J.P. Landesman, Pure and Applied Chemistry, Vol.57 (1985) p. 1391-1402). Dans le composé obtenu dans cet exemple, x est inférieur ou égal à 0,50. Un nouveau carbure a donc été obtenu et le domaine d'existence des carbures cubiques de niobium a été étendu.

EXEMPLE 23

Préparation de carbure de molybdène $Mo_2C$

La poudre de graphite et la poudre de molybdène ont été mélangées dans un rapport atomique de 1/2.
La masse initiale du mélange était de 3,76 g.
Le rapport en masse de la poudre aux billes était de 3,76/17,4.
Le broyage a été effectué pendant 24 heures sous atmosphère d'azote.
La masse de produit obtenu était de 4,12 g, incluant 0,36 g de WCh + "TiC".
La consommation des billes était de 2,2%.
La figure 36 représente le cliché de diffraction des rayons X du produit obtenu après broyage. Les raies s'indexent avec une structure cubique type NaCl avec un paramètre a voisin de 0,427 nm. Cette structure diffère de celles de $\alpha$-$Mo_2C$ orthorhombique (Pbcn) et $\beta$-$Mo_2C$ hexagonal ($P_{63}$/mmc). Elle diffère également de celle du carbure $\gamma$'-MoC de l'exemple 20. Les carbures cubiques $MoC_x$ existent pour x compris entre 0,69 et 0,75 (Cf."E.K. Storms" précité et "De Novion" précité) avec des paramètres respectifs de 0,4266 nm pour x = 0,69 et 0,4281 pour x = 0,75. Dans le composé obtenu, x est inférieur ou égal à 0,50. Un nouveau carbure a donc été obtenu et le domaine d'existence des carbures cubiques de molybdène a été étendu.

EXEMPLE 24

Préparation de carbure de vanadium $V_2C$

La poudre de graphite et la poudre de vanadium ont été mélangées dans un rapport atomique de 1/2.
La masse initiale du mélange était de 2,3 g.
Le rapport en masse de la poudre aux billes était de 2,3/17,0.
Le broyage a été effectué pendant 24 heures sous atmosphère d'azote.
La masse de produit obtenu était de 2,34 g, incluant 0,04 g de WCh + "TiC".
La consommation des billes était de 0,2%.
La figure 37 représente le cliché de diffraction des rayons X du produit obtenu après broyage. Les raies dues A WCh + "TiC" sont très faibles. Les raies s'indexent avec une structure cubique type NaCl de paramètre a = 0,4133±0,0003 nm alors que le broyage d'un mélange équiatomique de poudre de vanadium et de graphite conduit à un carbure cubique de paramètre a = 0,4155±0,0003, c'est-à-dire $VC_{0,8}$. Jusqu'à présent, on connaissait des carbures de vanadium cubiques $VC_x$ type NaCl, avec x compris entre 0,73 et 0,90 (Cf. De Novion et al, précité) et des paramètres respectifs de 0,413 nm pour x = 0,73 et 0,4166 pour x = 0,90. Dans le composé obtenu, x est inférieur ou égal à 0,50. Un nouveau carbure a donc été obtenu et le domaine d'existence des carbures cubiqu es de vanadium a été étendu.

EP 0 425 579 B1

Il apparaît ainsi que le procédé selon l'invention permet d'obtenir simplement les carbures à partir de poudre de carbone et de poudre de l'élément ou des éléments à carburer.

Certains carbures obtenus sont nouveaux. Il en est ainsi des carbures cubiques types NaCl de formule $MC_\alpha$, M représentant V, Nb ou Mo; et $x \leq 0,5$, tels qu'identifiés dans les exemples 22, 23 et 24.

EXEMPLE 25

Préparation de siliciure de molybdène

La poudre de molybdène et la poudre de silicium ont été mélangées dans un rapport atomique de 1/2.

La masse initiale du mélange était de 2 g.

Le rapport en masse de la poudre aux billes était de 2/19.

Le broyage a été effectué pendant 24 heures sous atmosphère d'azote.

La masse de produit obtenu était de 2,16 g, incluant 0,16 g de WCh + "TiC".

La consommation des billes était de 0,8%.

La figure 38 représente le cliché de diffraction des rayons X du produit obtenu après broyage. Les raies dues à WCh + "TiC" sont facilement identifiées. Aucune raie du silicium ou du molybdène n'est visible. Les autres raies montrent l'existence de:

1) $MoSi_2$ quadratique (fiche ASTM 6-0681 a = 0,320 nm et c = 0,785 nm).

2) $MoSi_2$ hexagonal (fiche ASTM 17-917 a = 0,4609 nm et c = 0,6558 nm).

EXEMPLE 26

Préparation de siliciure de fer

La poudre de fer et la poudre de silicium ont été mélangées dans un rapport atomique de 1/2.

La masse initiale du mélange était de 1,6 g.

Le rapport en masse de la poudre aux billes était de 1,6/16.

Le broyage a été effectué pendant 24 heures sous atmosphère d'azote.

La masse de produit obtenu était de 1,64 g.

La consommation des billes était de 0,25%.

La figure 39 représente le cliché de diffraction des rayons X du produit obtenu après broyage. Les raies dues à WCh + "TiC" sont facilement identifiées. Aucune raie du silicium ou du fer n'est visible. Tout le fer a été combiné avec du silicium. Ce fait est confirmé par le spectre Mössbauer (fig. 40). Les autres raies montrent l'existence de:

1) siliciure de fer$_\alpha$-$FeSi_2$ quadratique dit Leboïte qui présente des écarts à la stoechiométrie, la composition réelle allant de $FeSi_{2,03}$ à $FeSi_{3,60}$ (Binary Alloy Phase Diagrams, T.B. Massalsky, vol. 2, American Society for Metals, 1986)

2) siliciure de fer $\beta$-FeSi orthorhombique stoechiométrique.

3) siliciure de fer cubique FeSi. Le paramètre calculé a = 0,4481 0,0003 nm est conforme au paramètre a = 0,4488 nm de la fiche ASTM 22-632. Trois raies de faible intensité correspondant à d = 0,3394 nm, d = 0,2694 nm, d = 0,2244 nm pourraient correspondre à l'existence d'une surstructure de la structure cubique FeSi représentée sur la figure par $_sFS$.

EXEMPLE 27

Préparation de carbure de fer.

Cet exemple a été réalisé à l'aide d'un moulin planétaire Pulvérisette 7 décrit précédément, contenant des billes en carbure de tungstène $WC_h$ + "TiC". On a utilisé une poudre de graphite et une poudre de fer ayant toutes deux une pureté de 99,9% et une granulométrie de 44 $\mu$m, qui sont commercialisées par la société CERAC.

3 g d'une poudre constituée par un mélange équiatomique de graphite et de fer ont été broyés. Le rapport en masse de la poudre aux billes était de 1/55.

Le produit obtenu après 1 h 30 de broyage a été analysé. Le cliché de diffraction des rayons X et le spectre Mössbauer sont identiques à ceux obtenus pour le produit de l'exemple 16, sur lesquels les raies du fer n'apparaissent plus. Tout le fer a été carburé et les raies visibles correspondent à celles de $Fe_7C_3$, carbure à chaînes prismatiques qui contient une grande densité de défauts.

14

L'utilisation du broyeur Pulvérisette a permis d'obtenir une carburation totale du fer plus rapidement que le broyeur SPEX (exemple 16).

Il apparaît par conséquent que le procédé selon l'invention permet d'obtenir des carbures et des siliciures à partir de métaux de transition, d'éléments de la colonne III A et d'éléments de la colonne IV A du tableau périodique. La dimension de particules des produits obtenus est faible (inférieure à environ 1 μm) et les poudres sont noires. Le procédé permet en outre d'obtenir des produits nouveaux.

Ces produits sont utilisés par exemple pour leur point de fusion élevé, leur grande dureté, leur stabilité thermique, leur résistance à l'usure, leur conductivité électrique.

Leurs propriétés abrasives sont utilisées dans les outils de coupe.

Les applications principales des siliciures se font dans le domaine de la protection thermique. En outre, le siliciure de fer est un matériau thermoélectronique prometteur (Cf. S. Sekiguchi et al, Supplément à Trans. Japan Institute of Metals, Vol. 29 (1988) 343-346).

**Revendications**

1. Procédé de préparation de poudre de carbures ou de siliciures M,X, M représentant un ou plusieurs éléments choisis parmi les métaux de transition et/ou les éléments de la colonne III A et/ou les éléments de la colonne IV A, X représentant C ou Si, M étant différent de C, W et Re lorsque X représente C et M représente un seul élément, M étant différent de V, Nb, W et Ta lorsque X représente Si et M représente un seul élément, caractérisé en ce qu'il est effectué par voie mécanochimique et qu'il consiste à:

    1) mélanger une poudre de X avec une poudre de M, la proportion de M et de X étant choisie de sorte à combiner la totalité de M avec X;

    2) faire subir au mélange de poudres un broyage mécanique pendant une durée suffisante pour obtenir ledit composé de M et de X, le broyage étant effectué à l'aide d'un broyeur à haute énergie.

2. Procédé selon la revendication 1, caractérisé en ce que la proportion de X est supérieure à 2% en poids par rapport au poids total de mélange de poudres.

3. Procédé selon l'une quelconque des revendications 1 et 2, caractérisé en ce que les éléments de la colonne III A choisis pour M sont B et Al.

4. Procédé selon l'une quelconque des revendications 1 et 3, caractérisé en ce que l'élément de la colonne IV A choisi pour M est Si.

5. Procédé selon l'une quelconque des revendications 1 à 4, caractérisé en ce que les éléments de transition choisis pour M sont Ti, V, Cr, Mn, Fe, Co, Ni, Zr, Nb, Mo, Hf, Ta lorsque X est du carbone.

6. Procédé selon l'une quelconque des revendications 1 à 4, caractérisé en ce que les éléments de transition choisis pour M sont Ti, Cr, Mn, Fe, Co, Ni, Zr, Mo, Hf et Re lorsque X est du silicium.

7. Procédé selon l'une quelconque des revendications 1 à 6, caractérisé en ce que le broyage est effectué de manière discontinue.

8. Procédé selon l'une quelconque des revendications 1 à 7, caractérisé en ce que la poudre de M est un mélange de poudres d'éléments sous forme libre choisis parmi les métaux de transition et/ou les éléments de la colonne III A et/ou les éléments de la colonne IV A.

9. Procédé selon l'une quelconque des revendications 1 à 7, caractérisé en ce que la poudre de M est une poudre d'un alliage et/ou d'un composé d'au moins deux éléments choisis parmi les métaux de transition et/ou les éléments de la colonne III A et/ou les éléments de la colonne IV A.

10. Procédé selon l'une quelconque des revendications 1 à 7, caractérisé en ce que la poudre de M est un mélange de poudre d'au moins un élément sous forme libre et de poudre d'un alliage et/ou d'un composé d'au moins deux éléments, tous les éléments étant choisis parmi les métaux de transition et/ou les éléments de la colonne III A et/ou les éléments de la colonne IV A.

11. Carbures obtenus selon le procédé de l'une quelconque des revendications 1 à 10.

**12.** Carbure NbC$_x$, x<0,71.

**13.** Carbure MoC$_x$, x<0,69.

**14.** Carbure VC$_x$, x<0,73.

**15.** Siliciures obtenus selon le procédé de l'une quelconque des revendications 1 à 10.

**Claims**

**1.** A process for the preparation of a powder of M, X silicides or carbides, M denoting one or more elements selected from the transition metals and/or the elements of column III A and/or the elements of column IV A, X denoting C or Si, M being different from C, W and Re when X denotes C and M denotes a single element, M being different from V, Nb, W and Ta when X denotes Si and M denotes a single element, characterised in that it is effected mechanochemically and comprises:
  1) mixing a powder of X with a powder of M, the proportion of M and X being so selected as to combine all of M with X;
  2) subjecting the mixture of powders to a mechanical crushing for a sufficient time to produce the said compound of M and X, crushing being carried out by means of a high-energy mill.

**2.** A process according to claim 1, characterised in that the proportion of X is greater than 2% by weight with respect to the total weight of powder mixture.

**3.** A process according to claim 1 or 2, characterised in that the elements of column III A selected for M are B and Al.

**4.** A process according to claim 1 or 3, characterised in that the element of column IV A selected for M is Si.

**5.** A process according to any one of claims 1 to 4, characterised in that the transition elements selected for M are Ti, V, Cr, Mn, Fe, Co, Ni, Zr, Nb, Mo, Hf, Ta, when X is carbon.

**6.** A process according to any one of claims 1 to 4, characterised in that the transition elements selected for M are Ti, Cr, Mn, Fe, Co, Ni, Zr, Mo, Hf and Re when X is silicon.

**7.** A process according to any one of claims 1 to 6, characterised in that crushing is carried out intermittently.

**8.** A process according to any one of claims 1 to 7, characterised in that the powder of M is a mixture of powders of elements in free form selected from the transition metals and/or the elements of column III A and/or the elements of column IV A.

**9.** A process according to any one of claims 1 to 7, characterised in that the powder of M is a powder of an alloy and/or of a compound of at least two elements selected from the transition metals and/or the elements of column III A and/or the elements of column IV A.

**10.** A process according to any one of claims 1 to 7, characterised in that the powder of M is a mixture of powder of at least one element in free form and powder of an alloy and/or of a compound of at least two elements, all the elements being selected from the transition metals and/or the elements of column III A and/or the elements of column IV A.

**11.** Carbides produced by the process of any one of claims 1 to 10.

**12.** NbC$_x$ carbide, x<0.71.

**13.** MoC$_x$ carbide, x<0.69.

**14.** VC$_x$ carbide, x<0.73.

16

EP 0 425 579 B1

**15.** Silicides prepared by the process of any one of claims 1 to 10.

**Patentansprüche**

**1.** Verfahren zur Herstellung von Karbid- oder Silicidpulver M,X, wobei M ein oder mehrere Elemente darstellt, die aus den Obergangsmetallen und/oder den Elementen der Gruppe III A und/oder den Elementen der Gruppe IV A ausgewählt sind, X C oder Si darstellt, wobei M nicht C, W und Re ist, wenn X C darstellt und M ein einzelnes Element darstellt, M nicht V, Nb, W und Ta ist, wenn X Si darstellt und M ein einzelnes Element darstellt, dadurch gekennzeichnet, daß es auf mechanochemischem Weg durchgeführt wird und daß es darin besteht,

1) ein Pulver aus X mit einem Pulver aus M zu mischen, wobei der Anteil von M und von X so gewählt ist, daß das gesamte M mit X kombiniert wird;

2) die Mischung der Pulver mechanischem Zerkleinern über einen Zeitraum zu unterwerfen, der ausreicht, um die genannte Verbindung aus M und X zu erhalten, wobei das Zerkleinern mit Hilfe eines Hochenergiezerkleinerers durchgeführt wird.

**2.** Verfahren nach Anspruch 1, dadurch gekennzeichnet, daß der Anteil von X über 2 Gew.-%, bezogen auf das Gesamtgewicht der Pulvermischung, beträgt.

**3.** Verfahren nach einem der Ansprüche 1 und 2, dadurch gekennzeichnet, daß die für M gewählten Elemente der Gruppe III A B und Al sind.

**4.** Verfahren nach einem der Ansprüche 1 und 3, dadurch gekennzeichnet, daß das für M gewählte Element der Gruppe IV A Si ist.

**5.** Verfahren nach einem der Ansprüche 1 bis 4, dadurch gekennzeichnet, daß die für M gewählten Übergangselemente Ti, V, Cr, Mn, Fe, Co, Ni, Zr, Nb, Mo, Hf, Ta sind, wenn X Kohlenstoff ist.

**6.** Verfahren nach einem der Ansprüche 1 bis 4, dadurch gekennzeichnet, daß die für M gewählten Übergangselemente Ti, Cr, Mn, Fe, Co, Ni, Zr, Mo, Hf und Re sind, wenn X Silizium ist.

**7.** Verfahren nach einem der Ansprüche 1 bis 6, dadurch gekennzeichnet, daß das Zerkleinern diskontinuierlich durchgeführt wird.

**8.** Verfahren nach einem der Ansprüche 1 bis 7, dadurch gekennzeichnet, daß das Pulver aus M eine Mischung aus Pulvern von Elementen in freier Form ist, die aus den Übergangsmetallen und/oder den Elementen der Gruppe III A und/oder den Elementen der Gruppe IV A ausgewählt sind.

**9.** Verfahren nach einem der Ansprüche 1 bis 7, dadurch gekennzeichnet, daß das Pulver aus M ein Pulver aus einer Legierung und/oder aus einer Verbindung aus zumindest zwei Elementen ist, die aus den Übergangsmetallen und/oder den Elementen der Gruppe III A und/oder den Elementen der Gruppe IV A ausgewählt sind.

**10.** Verfahren nach einem der Ansprüche 1 bis 7, dadurch gekennzeichnet, daß das Pulver aus M eine Mischung aus Pulver aus zumindest einem Element in freier Form und aus Pulver einer Legierung und/oder einer Verbindung aus zumindest zwei Elementen ist, wobei alle Elemente aus den Übergangsmetallen und/oder den Elementen der Gruppe III A und/oder den Elementen der Gruppe IV A ausgewählt sind.

**11.** Karbide, die nach dem Verfahren nach einem der Ansprüche 1 bis 10 erhalten worden sind.

**12.** Karbid $NbC_x$, x<0,71.

**13.** Karbid $MoC_x$, x<0,69.

**14.** Karbid $VC_x$, x<0,73.

**15.** Silicide, die nach dem Verfahren nach einem der Ansprüche 1 bis 10 erhalten worden sind.

17

10μ

40μ

fig. 1

Fig. 2

Fig. 3

FIG. 4

Fig. 5

Fig. 6

Fig. 7

Fig. 8

Fig. 9

Fig. 10

Fig. 11

Fig. 12

Fig. 13

Fig. 14

Fig. 15

EP 0 425 579 B1

Fig. 16

FIG. 17

Fig. 18

Fig. 19

Fig. 20

Fig. 21

Fig. 22

Fig. 23

Fig. 24

Fig. 25

Fig. 26

EP 0 425 579 B1

Fig. 28

Fig. 29

Fig. 27

Fig. 30

Fig. 31

Fig. 32

Fig. 33

Fig. 34

Fig. 35

Fig. 36

Fig. 37

Fig. 38

Fig. 39

EP 0 425 579 B1

Fig. 40

Fig. 41